# EUROPEAN PATENT APPLICATION

(11) **EP 4 832 533 A1**
(43) Date of publication of application: **28.10.2026**
(21) Application number: 24915176.2
(22) Date of filing: 26.12.2024
(51) Int. Cl.: H04W 12/041, H04L 9/08

(54) **KEY DETERMINATION METHOD, APPARATUS, SYSTEM, AND STORAGE MEDIUM**

(30) Priority: 03.01.2024 CN 202410012245
(71) Applicant: Huawei Technologies Co., Ltd., Shenzhen, Guangdong 518129 (CN)
(72) Inventor: XIAO, Yao, Shenzhen, Guangdong 518129 (CN); WANG, Wenhui, Shenzhen, Guangdong 518129 (CN); SUN, Li, Shenzhen, Guangdong 518129 (CN); YANG, Lu, Shenzhen, Guangdong 518129 (CN)
(74) Representative: Huawei European IPR
(86) International application number: PCT/CN2024/142812
(87) International publication number: WO 2025/145961

(57) **Abstract**

Embodiments of the present disclosure provide a method for determining a key, a communication apparatus, a system, and a storage medium. In this method, the communication apparatus extracts channel randomness information from an estimated channel matrix. Then, the communication apparatus quantizes the channel randomness information, where the quantized channel randomness information belongs to a quotient group of a discrete integer field. Then, the communication apparatus determines a physical layer key based on the quantized channel randomness information. In this way, in embodiments of the present disclosure, when generating a key, the communication apparatus may not need to obtain the empirical distribution of an estimated channel or the related information, thereby reducing computing overhead and processing latency. In addition, the generated key has high quality as it can meet uniform distribution requirements.

## Description

This application claims priority to Chinese Patent Application No. 202410012245.X, filed with the China National Intellectual Property Administration on January 3, 2024 and entitled "METHOD FOR DETERMINING KEY, APPARATUS, SYSTEM, AND STORAGE MEDIUM", which is incorporated herein by reference in its entirety.

### TECHNICAL FIELD

The present disclosure generally relates to the communication field, and more specifically, to a method for determining a key, an apparatus, a system, and a computer-readable storage medium.

### BACKGROUND

Future 6G networks will face various security threats. First, continuous progress of computing technologies poses challenges to cryptographic security systems that rely on computational complexity. Modern cryptography is built based on classical computational complexity theories. With the development of computing technologies, especially the increasing maturity of quantum computing, the security of classical cryptographic technologies is challenged. In addition, signal transmission is vulnerable to attacks due to the open nature of radio channels, requiring further improvement on air interface defense mechanisms in cellular networks. Strengthening the underlying defense barrier of wireless networks is an important problem that needs to be resolved in 6G network security. Furthermore, new applications such as positioning and sensing pose new requirements on signal-level security, which can hardly be met by using higher-level cryptographic technologies.Beyond delivering an enhanced user experience on the basis of 5G, 6G is expected to support many new applications. Without effective signal-level integrity protection, signals used for ranging and positioning is easily tampered with, potentially leading to severe consequences in some applications (such as smart car keys and contactless payment). However, such threats cannot be effectively mitigated through higher-level encryption alone. In the 6G era, an "external" security mechanism that relies only on higher-level cryptography will be greatly challenged. Therefore, a link-level endogenous security mechanism needs to be studied urgently.

### SUMMARY

Embodiments of the present disclosure provide a method for determining a key, an apparatus, a system, and a computer-readable storage medium. The present disclosure enables key generation without requiring the empirical distribution of an estimated channel or related information, thereby reducing computing overhead and processing latency. In addition, the generated key has high quality as it can meet uniform distribution requirements.

According to a first aspect, a method for determining a key is provided. The method may be performed by a communication apparatus, for example, a terminal device, a chip in the terminal device, a network device, or a chip in the network device. The following provides descriptions by using an example in which the method is performed by a terminal device or a network device. In this method, the communication apparatus extracts channel randomness information from an estimated channel matrix. Then, the communication apparatus quantizes the channel randomness information, where the quantized channel randomness information belongs to a quotient group of a discrete integer field. Then, the communication apparatus determines a physical layer key based on the quantized channel randomness information. In this manner, a key used for security is extracted from a radio channel itself, and empirical distribution of an estimated channel or related information does not need to be obtained, thereby reducing computing overhead and processing latency. In addition, the generated key has high quality as it can meet uniform distribution requirements, and key quality is high.

In some implementation, the channel randomness information is quantized based on a first mapping function determined based on a quantization level. In this way, a uniformly distributed key can be obtained.

In some implementations, in a process of quantizing the channel randomness information, the communication apparatus maps, based on a second mapping function, the channel randomness information from its domain of definition to a first value interval, to obtain a value of the channel randomness information in the first value interval. In addition, the communication apparatus maps, based on the first mapping function, the value of the channel randomness information in the first value interval to the quotient group of the discrete integer field. In this manner, a value of the second mapping function is used as a parameter of the first mapping function, and a mapping manner (or referred to as group homomorphism) based on the quotient group is used to replace a hard decision based on a truncation interval of a threshold, so as to avoid a quantization error caused by threshold design in a decision process, and obtain a uniformly distributed key.

In some implementations, a first parameter of the first mapping function is obtained based on an output of the second mapping function, and a second parameter of the first mapping function is obtained based on the quantization level. In this manner, the parameter of the first mapping function is constructed based on the output of the second mapping function and the quantization level, so that the generated key has high quality as it can meet uniform distribution requirements, thereby reducing computing overhead and processing latency.

In some implementations, the channel randomness information is a real part or an imaginary part of an element value in the estimated channel matrix, and the second mapping function is a cumulative distribution function of a standard normal distribution. In this manner, the randomness information can be obtained from the real part or the imaginary part of the element value in the estimated channel matrix without using the empirical distribution parameter, and a uniformly distributed physical layer key is generated. In addition, this manner can also be compatible with a scenario in which the accurate empirical distribution parameter of the real part or the imaginary part of the element value can be obtained.

In some implementations, the channel randomness information is a modulus of an element value in the estimated channel matrix, and the second mapping function is a cumulative distribution function of a Rayleigh distribution. In this manner, the randomness information can be obtained from the modulus of the element value in the estimated channel matrix without using the empirical distribution parameter, and a uniformly distributed physical layer key is generated. In addition, this manner can be compatible with a scenario in which the accurate empirical distribution parameter of the modulus of the element value can be obtained.

In some implementations, the channel randomness information is a square of a modulus of an element value in the estimated channel matrix, and the second mapping function is a function defined based on an exponential distribution characteristic. In this manner, the randomness information can be obtained from the square of the modulus of the element value in the estimated channel matrix without using the empirical distribution parameter, and a uniformly distributed physical layer key is generated. In addition, this manner can be compatible with a scenario in which the accurate empirical distribution parameter of the square of the modulus of the element value can be obtained.

In some implementations, the channel randomness information is an argument of an element value in the estimated channel matrix, and the second mapping function is a function defined based on the argument. This manner can be compatible with the procedures of the foregoing other solutions, and also includes a more comprehensive theoretical explanation and computing method, thereby reducing computing costs.

In some implementations, an input of the second mapping function may be channel randomness information normalized based on an empirical distribution parameter. Alternatively, an input of the second mapping function may be the channel randomness information. In this way, this manner can be compatible with a scenario in which the experience distribution parameter is used. Therefore, in a scenario in which the accurate experience distribution parameter can be obtained, a high-quality key can be generated without performing hard decision based on a truncation interval of a threshold, thereby reducing a computational process.

In some implementations, the channel randomness information is an argument of an element value in the estimated channel matrix, and the second mapping function is a cumulative distribution function of a uniform distribution over an interval [0,2π]. A value of the cumulative distribution function of a uniform distribution over the interval [0,2π] based on the corresponding argument is used as a parameter of the first mapping function, so that a mapping manner based on the quotient group is implemented. In this manner, the randomness information can be obtained from the argument of the element value in the estimated channel matrix without using the empirical distribution parameter, and a uniformly distributed physical layer key is generated. In addition, this manner can also be compatible with a scenario in which the accurate empirical distribution parameter of the argument of the element value can be obtained.

In some implementations, the channel randomness information is an argument of an element value in the estimated channel matrix, a first parameter of the first mapping function is obtained based on the argument, and a second parameter of the first mapping function is obtained based on the quantization level. The argument is directly used as a parameter of the first mapping function, so that a mapping manner based on the quotient group is implemented. In this manner, the randomness information can be obtained from the argument of the element value in the estimated channel matrix without using the empirical distribution parameter, and a uniformly distributed physical layer key is generated. In addition, this manner can also be compatible with a scenario in which the accurate empirical distribution parameter of the argument of the element value can be obtained.

In some implementations, the first mapping function is used to scale an interval corresponding to the first parameter from a first interval to a second interval, and then map the second interval to the quotient group of the discrete integer field, where an upper limit of the second interval is an integer multiple of the quantization level. In this way, two adjacent high-probability values may be mapped to different integer values, to obtain discrete integer values used to generate a key.

In some implementations, the first mapping function is used to scale an interval corresponding to the first parameter, and then map the scaled interval to the quotient group of the discrete integer field, where an upper limit of the scaled interval is an integer multiple of the quantization level, and when the channel randomness information normalized based on the empirical distribution parameter is not used as the input of the second mapping function, the integer multiple is greater than a preset threshold. After amplification by a multiple, the output integer can follow a uniform distribution. Based on group homomorphism-based calculation, two adjacent high-probability values may be mapped to different integer values, to obtain discrete integer values used to generate a key.

In some implementations, the channel randomness information is determined based on a mode selected by a first communication apparatus that performs the method, and the mode is (i) determined according to a protocol, or (ii) determined based on signaling exchange between the first communication apparatus and a second communication apparatus, where the first communication apparatus communicates with the second communication apparatus by using the physical layer key, or a combination of (i) and (ii). In this way, a key is generated based on different modes, thereby improving key quality.

In some implementations, the mode is selected based on a condition of a channel between the first communication apparatus and the second communication apparatus. In this way, a key may be generated based on different channel conditions through different features of the element value in the estimated channel matrix, so that the generated key has high quality.

In some implementations, the method further includes: receiving or sending, when at least one of the channel conditions changes, an indication for updating the mode. In this way, when the channel condition changes, the element value in the estimated channel matrix based on which the key is generated may be flexibly switched, to generate a high-quality key.

In some implementations, the channel randomness information is extracted based on an index of an element value in the estimated channel matrix. In this way, a location of the element value in the estimated channel matrix can be determined based on the index, so that an element value that meets a requirement is selected to generate a key.

In some implementations, the index is agreed on in advance between the first communication apparatus that performs the method and the second communication apparatus, where the first communication apparatus communicates with the second communication apparatus by using the physical layer key; or the index is determined based on signaling exchange between the first communication apparatus and the second communication apparatus; or the two manners of agreeing in advance and signaling exchange may be combined. In this way, the element value in the estimated channel matrix can be selected in a plurality of manners, and the manners are flexible.

According to a second aspect, a communication apparatus is provided. For beneficial effects, refer to the descriptions of the second aspect. Details are not described herein again. The communication apparatus has a function of implementing behavior in the method instance in the second aspect. The function may be implemented by hardware, or may be implemented by hardware executing corresponding software. The hardware or software includes one or more modules corresponding to the foregoing function. In a possible design, the communication apparatus includes an extraction unit, configured to extract channel randomness information from an estimated channel matrix. The communication apparatus further includes a quantization unit, configured to quantize the channel randomness information, where the quantized channel randomness information belongs to a quotient group of a discrete integer field. The communication apparatus further includes a determining unit, configured to determine a physical layer key based on the quantized channel randomness information.

According to a third aspect, an apparatus is provided, including a processor and a memory that stores a computer program or instructions. When the computer program or the instructions are executed by the processor, the electronic device is caused to perform the method according to any one of the first aspect and the implementations of the first aspect.

According to a fourth aspect, a computer-readable storage medium is provided. The computer-readable storage medium stores a computer program or instructions. When the computer program or the instructions are executed by an electronic device, the electronic device is caused to perform the method performed by the apparatuses in the foregoing aspects.

According to a fifth aspect, a computer program (product) is provided. The computer program (product) includes a computer program or instructions. When the computer program or the instructions are executed by an electronic device, the electronic device is caused to perform the method performed by the apparatuses in the foregoing aspects.

According to a sixth aspect, an embodiment of the present disclosure provides a chip system. The chip system includes a processor, configured to implement functions of the apparatuses in the methods of the foregoing aspects. In a possible design, the chip system further includes a memory, configured to store a computer program or instructions and/or data. The chip system may include a chip, or may include a chip and another discrete component.

According to a seventh aspect, an embodiment of the present disclosure further provides a key determining system, including a communication apparatus configured to perform the method according to the first aspect.

### BRIEF DESCRIPTION OF DRAWINGS

FIG. 1A is a diagram of an architecture of a communication system according to some embodiments of the present disclosure;
FIG. 1B is a schematic flowchart of key generation;
FIG. 2 is a schematic flowchart of determining a key according to some embodiments of the present disclosure;
FIG. 3 is a schematic flowchart of determining a key according to some other embodiments of the present disclosure;
FIG. 4 is a schematic flowchart of determining a key in an example scenario according to still some other embodiments of the present disclosure;
FIG. 5 is a diagram of a distribution that an output of a second mapping function follows in an example scenario according to some embodiments of the present disclosure;
FIG. 6 is a schematic flowchart of determining a key in an example scenario according to still some other embodiments of the present disclosure;
FIG. 7 is a schematic flowchart of determining a key in an example scenario according to still some other embodiments of the present disclosure;
FIG. 8 is a diagram of a distribution that an output of a second mapping function follows in an example scenario according to some other embodiments of the present disclosure;
FIG. 9 is a schematic flowchart of determining a key in an example scenario according to still some other embodiments of the present disclosure;
FIG. 10 is a diagram of a distribution that an output of a second mapping function follows in an example scenario according to still some other embodiments of the present disclosure;
FIG. 11 is a schematic flowchart of determining a key in an example scenario according to still some other embodiments of the present disclosure;
FIG. 12 is a schematic flowchart of determining a key in an example scenario according to still some other embodiments of the present disclosure;
FIG. 13 is a schematic flowchart of signaling configuration in an example scenario according to some embodiments of the present disclosure;
FIG. 14A to FIG. 14F are diagrams of comparison of simulation results according to some embodiments of the present disclosure;
FIG. 15 is a schematic flowchart of implementation at a communication apparatus according to some embodiments of the present disclosure;
FIG. 16 is a diagram of main composition of an example device in a possible implementation according to an embodiment of the present disclosure; and
FIG. 17 is a simplified block diagram of main composition of an example device in a possible implementation according to an embodiment of the present disclosure.

### DESCRIPTION OF EMBODIMENTS

Embodiments of the present disclosure are described in more detail in the following with reference to accompanying drawings. Although some embodiments of the present disclosure are shown in the accompanying drawings, it should be understood that embodiments of the present disclosure may be implemented in various forms, and should not be construed as being limited to the embodiments described herein. On the contrary, these embodiments are provided so that the present disclosure will be thoroughly and completely understood. It should be understood that the accompanying drawings and embodiments of the present disclosure are merely used as examples, but are not intended to limit the protection scope of the present disclosure.

In descriptions of embodiments of the present disclosure, the term "including" and similar terms thereof shall be understood as open inclusion, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of the present disclosure may be implemented according to any appropriate communication protocol, including but not limited to cellular communication protocols such as 3rd generation (3rd Generation, 3G), 4th generation (4G), 5th generation (5G), and a future communication protocol (for example, 6th generation (6G)), wireless local area network communication protocols such as the Institute of Electrical and Electronics Engineers (Institute of Electrical and Electronics Engineers, IEEE) 802.11, and/or any other protocols currently known or developed in the future. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

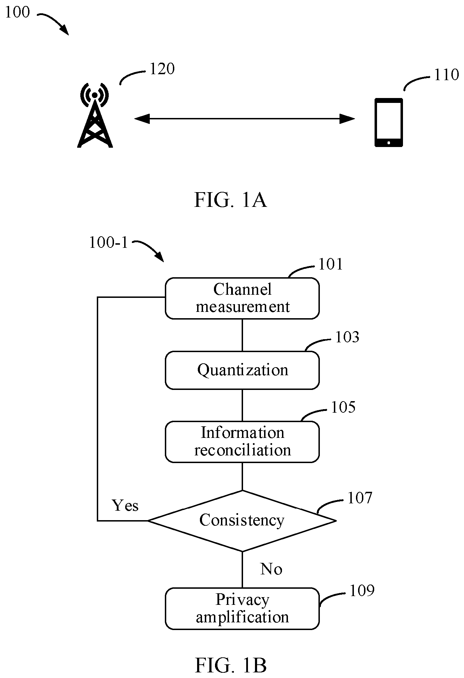

FIG. 1A is a diagram of an architecture of a communication system according to some embodiments of the present disclosure. As shown in FIG. 1A, a method for determining a key provided in embodiments of the present disclosure may be applied to the communication system 100, for example, a wireless communication system such as a 5G communication system or a satellite communication system. In the communication system 100, a terminal device 110 and a network device 120 are shown. Either the terminal device 110 or the network device 120 may be configured to determine a key, and then use the determined key to encrypt a signal/data/information that needs to be sent to the other party. In addition to transmitting a signal/data/information used for communication, the terminal device 110 and the network device 120 may further transmit some signaling configurations, such as information about mode selection, that are used to generate the key, where a mode is related to a condition of a channel between the terminal device 110 and the network device 120, so that the key is determined in different modes for different channel conditions. The signaling configurations may be sent by the terminal device 110 to the network device 120. Alternatively, the signaling configurations may be sent by the network device 120 to the terminal device 110. It should be noted that, in FIG. 1A, the terminal device 110 and the network device 120 are used as examples for description. The communication system 100 may include any quantity of terminal devices or network devices.

The communication system 100 in embodiments of the present disclosure includes but is not limited to a narrowband internet of things (narrowband internet of things, NB-IoT) system, a global system for mobile communications (global system for mobile communications, GSM), an enhanced data rate GSM evolution (enhanced data rate for GSM evolution, EDGE) system, a wideband code division multiple access (wideband code division multiple access, WCDMA) system, and a code division multiple access 2000 (code division multiple access 2000, CDMA2000) system, a time division-synchronization code division multiple access (time division-synchronization code division multiple access, TD-SCDMA) system, a long term evolution (long term evolution, LTE) system, three application scenarios of a 5G mobile communication system: enhanced mobile broadband (enhanced mobile broadband, eMBB), ultra-reliable low-latency communication (ultra-reliable low-latency communication, URLLC), and enhanced machine type communication (enhanced machine type communication, eMTC), and the like. The solution in embodiments of the present disclosure is applicable to a TDD (time division duplexing, time division duplexing) scenario, and can improve a consistency rate of physical layer keys generated under a non-ideal channel reciprocity condition. TDD is a duplexing mode of a communication system, and is used in a mobile communication system to separate a receiving channel and a transmission channel (or an uplink and a downlink). In the mobile communication system in the TDD mode, receiving and transmission are performed in different slots of a same frequency channel, that is, a carrier, and the receiving channel and the transmission channel are separated by using guard time. This solution is applicable to any wireless network scenario including a transmit end and a legitimate receive end. The scenario may exist in a plurality of communication systems, including but not limited to: a GSM system, a CDMA system, a WCDMA system, a GPRS system, an LTE system, an LTE-A system, a UMTS system, a 5G system, a beyond 5G (beyond 5G, B5G) system, and the like.

It should be understood that the foregoing wireless communication system is applicable to both a millimeter-wave high-frequency scenario (above 6G), and is also applicable to a lowfrequency scenario (sub 6G). An application scenario of the wireless communication system includes but is not limited to a communication system like a 5th generation (5G) system or a new radio (new radio, NR) communication system, or a future communication system like a future evolved public land mobile network (public land mobile network, PLMN) system. Embodiments of the present disclosure may also be used in a Wi-Fi network scenario, for example, to generate a physical layer security key in a Wi-Fi scenario and an endogenous security mechanism. Embodiments of the present disclosure may also be combined with various key generation solutions where randomness needs to be extracted from channel estimates.

The term "terminal" or "terminal device" used in embodiments of the present disclosure refers to any terminal device that can perform wired or wireless communication with a network device or with another terminal device. The terminal device may also sometimes be referred to as user equipment (user equipment, UE). The terminal device may be any type of mobile terminal, fixed terminal, or portable terminal. The terminal device may be various wireless communication devices that have a wireless communication function. For example, the terminal device (for example, the terminal device 110 shown in FIG. 1A) may be user equipment, a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device may alternatively be a communication chip having a communication module, or may be a vehicle having a communication function, a vehicle-mounted device (for example, a vehicle-mounted communication apparatus or a vehicle-mounted communication chip), or the like. The terminal device may have a wireless transceiver function. The terminal device can communicate (for example, perform wireless communication) with one or more network devices in one or more communication systems, and accept a network service provided by the network device. The network device herein includes but is not limited to an access network device. The user equipment includes but is not limited to a mobile terminal (mobile terminal), a mobile phone (mobile phone), a handset (handset), portable equipment (portable equipment), a mobile station (mobile station), a computer having a wireless communication function, and the like. The user equipment may be a portable mobile apparatus, a pocket-sized mobile apparatus, a handheld mobile apparatus, a computer built-in mobile apparatus, a vehicle-mounted mobile apparatus, an aircraft-mounted mobile apparatus, and the like. The user equipment may communicate with one or more core networks through a radio access network (radio access network, RAN).

The terminal device may be a cellular phone, a cordless phone, a session initiation protocol (session initiation protocol, SIP) phone, a wireless local loop (wireless local loop, WLL) station, a personal digital assistant (personal digital assistant, PDA) device, or a handheld device having a wireless communication function, a compute device, another processing device connected to a wireless modem, a vehicle-mounted device, a wearable device, a terminal device in a future 5G network or a future 6G network, a terminal apparatus in a future evolved PLMN network, and the like.

The terminal device may be specifically a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), and the like.

The terminal device may be deployed on land, including an indoor or outdoor device, or a handheld or vehicle-mounted device. Alternatively, the terminal device may be deployed on water (for example, on a ship). Alternatively, the terminal device may be deployed in the air (for example, on an airplane, a balloon, or a satellite).

Various devices having a wireless communication function may be configured to connect to a person, an object, a machine, and the like. The terminal device may be widely used in various scenarios, such as cellular communication, D2D, V2X, peer to peer (peer to peer, P2P), M2M, MTC, IoT, virtual reality (virtual reality, VR), augmented reality (augmented reality, AR), industrial control, autonomous driving, remote medical, smart grid, smart furniture, smart office, smart wearable, smart transportation, smart city, drones, robots, remote sensing, passive sensing, positioning, navigation and tracking, autonomous delivery, and the like. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device; may be an apparatus built in the foregoing device (for example, a communication module, a modem, or a chip in the foregoing device); or may be another processing device connected to the wireless modem. For ease of description, an example in which the terminal device is a terminal or a UE is used below for description. In some scenarios, the terminal device may alternatively serve as a base station. For example, the terminal device may serve as a scheduling entity, and provide a sidelink (sidelink) signal between UE in scenarios such as V2X, D2D, or P2P.

In embodiments of this application, an apparatus configured to implement the function of the terminal device may be the terminal device, or may be an apparatus that can support the terminal device in implementing the function, for example, a chip system or a chip, where the apparatus may be installed in the terminal device. In embodiments of this application, the chip system may include a chip, or may include a chip and another discrete component.

In embodiments of this application, the network device may be a device configured to communicate with the terminal device, and the network device may also be referred to as an access network device or a radio access network device. For example, the network device may be an access network device (or referred to as an access network site). The access network device is a device that provides a network access function, for example, a radio access network (radio access network, RAN) base station. The network device may specifically include a base station (base station, BS), or include a base station, a radio resource management device configured to control the base station, and the like. The network device may further include a relay station (a relay device), an access point, a base station or an NR base station in a 5G network, a base station in a future evolved PLMN network, and the like. The network device may be a wearable device or a vehicle-mounted device. Alternatively, the network device may be a communication chip having a communication module. The base station includes but is not limited to a common base station (for example, a gNB, an eNB, or a NodeB), a remote radio unit (remote radio unit, RRU), a macro (macro) site, a micro site (pico, femto, or the like), a relay (relay), an access point (access point, AP) having a wireless transceiver function, a transmission/reception point (transmission/reception point, TRP), or any other radio access device.

The term "network node" or "network device" used in embodiments of the present disclosure is an entity or a node that may be configured to communicate with the terminal device, for example, may be an access network device. The access network device may be an apparatus that is deployed in a radio access network and that provides a wireless communication function for a mobile terminal, for example, may be a radio access network (radio access network, RAN) network device. The access network device may include various types of base stations. The base station is configured to provide a wireless access service for the terminal device. For example, the network device (for example, an access network device 120 and an access network device 130) includes but is not limited to a gNodeB (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB, or a home NodeB, HNB), a baseband unit (baseband unit, BBU), a transmitting and receiving point (transmitting and receiving point, TRP), a transmitting point (transmitting point, TP), or a mobile switching center; may be an evolved (evolved) NB (eNB or eNodeB) in LTE; may be a base station device in a future 5G network or an access network device in a future evolved PLMN network; or may be a wearable device or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some functions of the network device. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. Examples of the network device include but are not limited to a NodeB (NodeB or NB), an evolved NodeB (evolved NodeB or eNodeB), a next generation NodeB (gNB), a transmission reception point (TRP), a remote radio unit (RRU), a radio head (radio head, RH), a remote radio head (remote radio head, RRH), an integrated access and backhaul (integrated access and backhaul, IAB), or a low power node, for example, a femto node, a pico node, a reconfigurable intelligent surface (RIS), a network-controlled repeater, and the like. In different communication systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented through a software module, a hardware module, or a combination of a software module and a hardware module.

In addition, for example, the network device of the access network device may be connected to a core network (core network, CN) device, and the core network device may be configured to provide a core network service for the access network device and the terminal device. The core network device may correspond to different devices in different systems. For example, in 3G, the core network device may correspond to a serving general packet radio system (general packet radio system, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In embodiments of this application, an apparatus configured to implement the function of the network device may be the terminal device, or may be an apparatus that can support the network device in implementing the function, for example, a chip system or a chip, where the apparatus may be installed in the network device. In embodiments of this application, the chip system may include a chip, or may include a chip and another discrete component.

The network device and the terminal device may be deployed on land, including an indoor or outdoor device, or a handheld or vehicle-mounted device, or may be deployed on water, or may be deployed on an airplane, a balloon, or a satellite in the air. A scenario in which the network device and the terminal device are located is not limited in embodiments of this application.

The RAN may be a 3GPP-related cellular system, for example, a 4G or 5G mobile communication system, or a future-oriented evolved system (for example, a 6G mobile communication system). The RAN may alternatively be an open access network (open RAN, O-RAN or ORAN), a cloud radio access network (cloud radio access network, CRAN), or a wireless fidelity (wireless fidelity, Wi-Fi) system. The RAN may alternatively be a communication system that integrates two or more of the foregoing systems.

Embodiments of the present disclosure provide a key determining solution for network security. In the 6G era, an existing "external" security mechanism that relies only on higher-level cryptography will be greatly challenged. Therefore, a link-level endogenous security mechanism needs to be studied urgently. An implementation of link-level security endogeny includes security resource endogeny. The security resource endogeny means that a resource for implementing security is inside a communication system, for example, a radio channel, random noise, and terminal hardware, instead of being distributed externally. The resource endogeny has two advantages. One is to ensure richness and continuous supply of randomness, providing a prerequisite for achieving strong security. The second is to avoid to a maximum extent a security risk and additional overheads caused by external distribution.

FIG. 1B is a schematic flowchart of key generation. A receive end and a transmit end need to perform steps in a procedure 100-1 of generating a physical layer key, such as channel measurement (101), quantization (103), information reconciliation (105), determining whether information reconciliation is consistent (107), and returning to the channel measurement step when the information reconciliation is consistent, or performing privacy amplification (109) when the information reconciliation is inconsistent, to obtain consistent keys. In some solutions, a quantization threshold needs to be determined in the quantization step, so that finally generated keys follow a uniform distribution. To achieve this objective, when a key is generated based on information about a radio channel, a statistical distribution feature of a channel *h* (or a quantity related to the channel *h*, for example, a modulus of *h*) needs to be known. The statistical distribution feature may be used to perform approximate statistical distribution by using empirical distribution.

To obtain as reliable empirical distribution as possible and determine a proper quantization threshold based on the empirical distribution, a large amount of channel observation data usually needs to be collected. In some solutions, quantization is performed based on a single threshold. That is, the receive end and the transmit end extract random factors from a legitimate channel, perform quantization based on the single threshold, and generate key bits. The receive end and the transmit end separately estimate a channel state (a matrix *H*) based on a large amount of collected data, and determine a quantization threshold based on empirical distribution of the estimated channel. In some other solutions, quantization is performed based on dual thresholds. The quantization solution based on dual thresholds can alleviate an error problem of the quantization based on a single threshold, and improve key consistency. The quantization based on dual thresholds means adding guard bands at two ends of a single threshold. When channel information is within a range of the guard band, the channel information is not used to generate a key. In the quantization based on dual thresholds, some channel estimates are discarded, leading to low key usage. A large amount of data still needs to be collected when a channel estimate close to the dual thresholds is quantized, to obtain empirical distribution of a channel state as accurate as possible.

The foregoing quantization solution based on a single threshold or the foregoing quantization solution based on dual thresholds causes extra computing overhead and extra processing latency. In addition, even if a large amount of observation data is collected, obtained empirical distribution may still be inaccurate. Consequently, a finally generated key does not meet uniform distribution requirements, affecting quality of the generated key. In some embodiments of the present disclosure, the step of quantization 103 may be implemented based on the procedure 100-1 by using a solution different from the solution of determining a quantization threshold. In a procedure of determining a key in embodiments of the present disclosure, a quantization threshold does not need to be calculated in the step of quantization 103, so that a calculation amount can be reduced. In addition, in some embodiments, empirical distribution does not need to be used, to avoid a problem in which quality of a generated key is low in the solution using empirical distribution because the empirical distribution obtained by collecting a large amount of observation data is inaccurate.

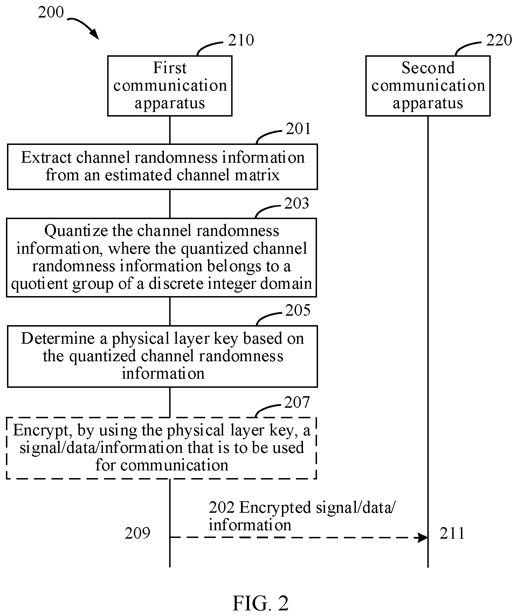

FIG. 2 is a schematic flowchart of determining a key according to some embodiments of the present disclosure. As shown in FIG. 2, a procedure 200 relates to a first communication apparatus 210 or a second communication apparatus 220, where the first communication apparatus 210 may be one of a terminal device 110 or a network device 120, and the second communication apparatus 220 may be the other of the terminal device 110 or the network device 120. For example, an example of the first communication apparatus 210 is UE (user equipment), and an example of the second communication apparatus 220 is a base station. Alternatively, an example of the first communication apparatus 210 is a base station, and an example of the second communication apparatus 220 is UE. It should be noted that the first communication apparatus 210 and the second communication apparatus 220 are not limited to the foregoing specific examples, and may alternatively be other terminal devices or network devices.

In the procedure 200, the first communication apparatus 210 extracts (201) channel randomness information from an estimated channel matrix, and the first communication apparatus 210 quantizes (203) the channel randomness information, where the quantized channel randomness information belongs to a quotient group of a discrete integer field. In some examples, channel estimation values are mapped from a continuous real number field to a positive integer quotient group based on homomorphic mapping of the quotient group, to obtain a physical layer key that is in a discrete real number field and that has a uniform distribution. The quotient group is defined as follows: $ℤ / nℤ = \left\{nℤ,1+nℤ,…,\left(n-2\right)+nℤ,\left(n-1\right)+nℤ\right\}$

The quotient group includes only integers from 0 to *n* - 1, that is, the value space of a key bit. In some examples, a relationship between a quantization level *m* and a key length is as follows: If an n-bit key string needs to be generated, the quantization level is *m* = 2*ⁿ*. For example, to generate a 4-bit key string, the quantization level is *m* = 2⁴, and a quantized value range is [0,2⁴ - 1]. A relationship between the quantization level *m* and a consistency rate is as follows: To ensure that a receive end (for example, the second communication apparatus 220) can correctly decrypt an encrypted signal transmitted by a transmit end (for example, the first communication apparatus 210), quantization results used to generate keys should be consistent. When a channel condition is poor and reciprocity between the transmit end and the receive end is not ideal, a finegrained (that is, high-quantization-level) quantization result may cause an increase in an inconsistency rate, and a coarse-grained quantization result can better resolve this problem. The quantization level *m* may be determined by referring to but not limited to one or a combination of the following two manners: (i) A consistency rate of keys generated at the transmit end and the receive end is compared in a feedback mode, and the quantization level is adjusted based on a comparison result of periodic feedback, where if the consistency rate is high, the quantization level is high; otherwise, the quantization level is low. (ii) The channel condition is affected by a real-time result of channel measurement, where if the channel condition is good, the quantization level is high; otherwise, the quantization level is low.

In some examples, the channel randomness information may be a real part of an element value in the estimated channel matrix, an imaginary part of an element value in the estimated channel matrix, a modulus of an element value in the estimated channel matrix, a square of a modulus of an element value in the estimated channel matrix, or an argument of an element value in the estimated channel matrix. In some embodiments, the channel randomness information may be quantized based on a first mapping function determined based on the quantization level. In some examples, a mapping function 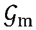 based on the quotient group is defined based on the quantization level *m*, where an output of the function is a non-negative integer in the discrete integer field, and belongs to the quotient group defined above. The first mapping function 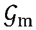 (where m is the quantization level) meets the following mapping relationship: ${G}_{m} : \left[0, 1\right] \times ℤ \to ℤ / mℤ = \left\{0,…,m-1\right\}$

In some examples, in a process of quantizing the channel randomness information, the first communication apparatus 210 may map, based on a second mapping function, the channel randomness information from its domain of definition to a first value interval, to obtain a value of the channel randomness information in the first value interval. In some embodiments below, the second mapping function is defined as a function Φ(*x*). For different examples of the channel randomness information, specific forms of the second mapping functions Φ(*x*) may be different. For example, Φ(*x*) may be determined based on a distribution that information corresponding to a selected mode follows. In some examples, Φ(*x*) may be a cumulative distribution function of a standard distribution corresponding to the distribution. The value of the channel randomness information in the first value interval is mapped, based on the first mapping function, to the quotient group of the discrete integer field. For example, a first parameter of the first mapping function is obtained based on an output of the second mapping function, a second parameter of the first mapping function is obtained based on the quantization level, the first parameter and the second parameter are used as inputs of the first mapping function, and the value of the channel randomness information in the first value interval is mapped to the quotient group of the discrete integer field. In different examples, ranges of the first value interval may be different. For details, refer to descriptions of the following embodiments. In some other examples, the second mapping function Φ(*x*) does not need to be defined, the first parameter of the first mapping function may be obtained based on the argument of the element value in the estimated channel matrix, and the second parameter of the first mapping function may be obtained based on the quantization level.

In some examples in which the channel randomness information is the real part or the imaginary part of the element value in the estimated channel matrix, the second mapping function is a cumulative distribution function of a standard normal distribution. In some examples in which the channel randomness information is the modulus of the element value in the estimated channel matrix, the second mapping function is a cumulative distribution function of a Rayleigh distribution. In some examples in which the channel randomness information is the square of the modulus of the element value in the estimated channel matrix, the second mapping function is a function defined based on an exponential distribution characteristic. For example, the second mapping function is Φ(*x*) *= e^{-x}, x* ≥ 0, where e is a natural constant. In some examples in which the channel randomness information is the argument of the element value in the estimated channel matrix, the second mapping function may be a function defined based on the argument. For example, the second mapping function is Φ(*x*) *= x*, where in different examples, *x* is the argument θ or *θ*/*α,* and 0≤θ≤2π. For details, refer to the following procedure 1100 for determining a key in Scenario 5. In some examples in which the channel randomness information is the argument of the element value in the estimated channel matrix, the second mapping function may be a cumulative distribution function of a uniform distribution over an interval [0,2π]. For example, the second mapping function is $Φ \left(x\right) = \frac{x}{2 π}$*.* In some examples, an empirical distribution parameter may be used in the process of determining the key. In this case, an input of the second mapping function may be channel randomness information normalized based on the empirical distribution parameter. In some other examples, an empirical distribution parameter may not be used in the process of determining the key. In this case, an input of the second mapping function may be the channel randomness information (which is not normalized based on the empirical distribution parameter). In some examples, whether to input the empirical distribution parameter *α* is determined based on a scenario requirement. If the empirical distribution parameter is not input, *α* = 1 by default.

In some examples, the first mapping function may be used to scale an interval corresponding to the first parameter from a first interval to a second interval, and then map the second interval to the quotient group of the discrete integer field, where an upper limit of the second interval is an integer multiple (*l* multiples) of the quantization level. For example, when the parameter *α* is input, an output result c = Φ (*x*) of the function Φ follows a uniform distribution, and 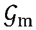 is used to scale c to an interval [0, *m*) and map to the quotient group $ℤ / m ℤ$*.* In some examples, the channel randomness information normalized based on the empirical distribution parameter is not used as the input of the second mapping function, but an integer multiple of an input value of the empirical distribution parameter is used as an input value of the second mapping function, and the integer multiple of the input value of the empirical distribution parameter is greater than a preset threshold. For example, when the parameter α is not input, 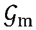 is used to scale c=Φ(*x*) to an interval [0*,lm*] and map to the quotient group $\frac{ℤ}{m ℤ}$, where *l* is a positive integer and *l* may be greater than or equal to 40. For example, a value of *l* may be 1000, where $l ∈ ℤ$, and 1000 is an example value of the preset threshold. In another embodiment, the preset threshold may alternatively be another value, for example, a specific integer greater than or equal to 40.

In some embodiments, for example, in a TDD scenario, modeling is performed on each element value *h* of a radio channel *H* between the receive end and the transmit end, and each element value *h* follows a complex Gaussian distribution: $h ∼ α ⋅ ℂN \left(0, 1\right)$, where *α* represents large-scale fading information, $ℂN \left(0, 1\right)$ represents small-scale fading information, and angle information (argument) of *h* is denoted as *θ* = arg (*h*)*.* An estimated channel value represented by each *h* or related information may be used to generate a key. In some examples, the channel randomness information is determined based on a mode selected by the first communication apparatus 210 that performs the procedure 200. Different examples of the channel randomness information may correspond to different modes selected for determining the key. The mode is related to the channel condition, and the mode may be selected based on a condition of a channel between the first communication apparatus 210 and the second communication apparatus 220. For example, one or more of propagation mechanisms of a radio wave, such as absorption, scattering, refraction, diffraction, flicking, and dispersion, affect an amplitude and a phase of the wave to some extent. In some environments, the propagation mechanism has a greater impact on the amplitude. In this case, during mode selection, amplitude-related information may be avoided as much as possible, and phase-related information, for example, *real*(*h*), *imag*(*h*), and *θ*, is preferentially used for quantization. In some environments, the propagation mechanism has a greater impact on the phase, and the amplitude is stable. In this case, during mode selection, amplitude-related information, for example, |*h*| and |*h*|², may be preferentially selected for quantization, where *h* represents the element value in the estimated channel matrix, and *θ* represents the argument of *h*. In some examples, the mode may be specified according to a protocol. In some other examples, the mode may be determined based on signaling exchange between the first communication apparatus 210 and the second communication apparatus 220. For example, the first communication apparatus 210 sends the selected mode to the second communication apparatus 220, or the first communication apparatus 210 receives, from the second communication apparatus 220, the selected mode sent by the second communication apparatus 220. The first communication apparatus 210 may receive or send, when at least one of the channel conditions changes, an indication for updating the selected mode.

In some examples, the channel randomness information may be extracted based on an index of an element value in the estimated channel matrix. In some examples, the index may be agreed on in advance between the first communication apparatus 210 and the second communication apparatus 220, or the index is determined based on signaling exchange between the first communication apparatus 210 and the second communication apparatus 220. For example, the first communication apparatus 210 sends the index to the second communication apparatus 220, or the first communication apparatus 210 receives, from the second communication apparatus 220, the index sent by the second communication apparatus 220. For example, for an estimated channel matrix *H* obtained through one sounding reference signal (sounding reference signal, SRS) measurement, the transmit end and the receive end select *h* at the same location to extract randomness information, and generate key bits. The location for selecting *h* may be agreed on by both parties according to a protocol, or may be notified to the other party as interaction information.

The first communication apparatus 210 determines (205) the physical layer key based on the quantized channel randomness information. For example, an output result *η* of 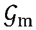 is converted into binary 01 bits, that is, key bits. Refer to the privacy amplification step (109) in FIG. 1B. In the privacy amplification step, quantized key bits may be used to generate a keystream based on a hash function. As mentioned above, the first communication apparatus 210 may be one of the terminal device 110 or the network device 120. In other words, both the terminal device 110 and the network device 120 can implement the method for determining a key in embodiments of the present disclosure. In some examples, after obtaining quantized keys by using the method, the terminal device 110 and the network device 120 respectively use the quantized keys as inputs of the hash function. Values input by the terminal device 110 and the network device 120 to the hash function are the same, so that keystreams output based on the hash function are also the same.

In some embodiments, after determining the physical layer key, the first communication apparatus 210 communicates with the second communication apparatus 220 by using the physical layer key. For example, the first communication apparatus 210 may encrypt (207), by using the physical layer key, a signal/data/information that is to be sent, and send (209) the encrypted signal/data/information 202 to the second communication apparatus 220. The second communication apparatus 220 may receive (211) the encrypted signal/data/information 202. It should be noted that, in some embodiments, the operations corresponding to 207 and 209 may be optional steps.

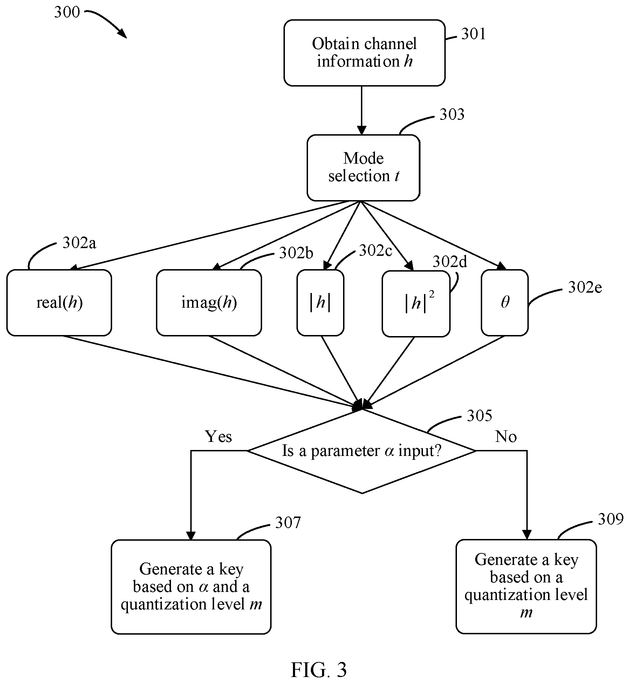

FIG. 3 is a schematic flowchart of determining a key according to some other embodiments of the present disclosure. As shown in a procedure 300 in FIG. 3, in 301, channel information *h*, that is, an element value *h* of an estimated channel matrix, is obtained. In 303, mode selection *t* is performed based on a channel condition. In some examples, information about the mode selection may be signaling exchanged between a receive end and a transmit end. For example, five modes 302a to 302e are shown, which respectively correspond to a real part, an imaginary part, a modulus, a square of a modulus, and an argument of the element value *h* of the estimated channel matrix. A corresponding function to be used is determined based on a selected mode. For example, the corresponding function is the cumulative distribution function mentioned above as some examples of the second mapping function, or the function defined based on the exponential distribution characteristic or the argument as some other examples of the second mapping function. In 305, it is determined whether there is an empirical distribution parameter *α* in input information. If there is the empirical distribution parameter *α* , 307 is performed, that is, quantization is performed based on the empirical distribution parameter *α* and a quantization level *m* to generate a key. If there is no empirical distribution parameter *α*, 309 is performed, that is, quantization is performed based on the quantization level *m* to generate a key. This embodiment of the present disclosure is based on the foregoing plurality of modes, where the real part, the imaginary part, the modulus |*h*|, the square |*h*|² of the modulus, and the argument *θ* of the element value *h* of the estimated channel matrix corresponding to the modes are channel endogenous information and can be mathematically modeled in an analytical form, and a scenario is comprehensively considered. The physical layer key generation method in this embodiment of the present disclosure may be combined with a physical layer encryption algorithm. In some examples, in a security module of the transmit end (for example, the first communication apparatus 210), randomness information is extracted from an estimated channel or related information, and is quantized to generate a key 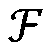 (*h*), for encrypting original information. In a TDD scenario, there is reciprocity between air interface channels at the transmit end and the receive end. After obtaining an estimated channel or related information that are reciprocal to the estimated channel or the related information of the transmit end, the receive end also extracts randomness information from the estimated channel or the related information to generate a key bit 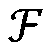 (*h*), and decrypts received encrypted information based on the key. To ensure quality of the key and reduce a possibility that an unauthorized eavesdropper increases a chance of obtaining a correct key based on a distribution rule of the key, in the solution in this embodiment of the present disclosure, keys used by both the transmit end and the receive end follow a uniform distribution. In this way, even if the unauthorized eavesdropper collects a large amount of data, the unauthorized eavesdropper can only guess the correct key. According to the procedure 300, using the empirical distribution parameter is an optional solution. For example, when the channel condition is good and empirical distribution approximation is accurate, the empirical distribution parameter may be used to generate the key. When the channel condition is not ideal and the empirical distribution approximation is inaccurate, the empirical distribution parameter can be avoided from being used to generate the key, thereby avoiding a problem in which approximation is inaccurate because a feature of statistical distribution of an estimated channel cannot be obtained in practice and the statistical distribution of the estimated channel can be only approximated based on empirical distribution expressed by sampled data of the estimated channel, and avoiding a problem in which key quality is reduced because a key finally generated through quantization does not follow a uniform distribution due to a threshold designed based on the empirical distribution when a parameter error between the empirical distribution and the statistical distribution is large.

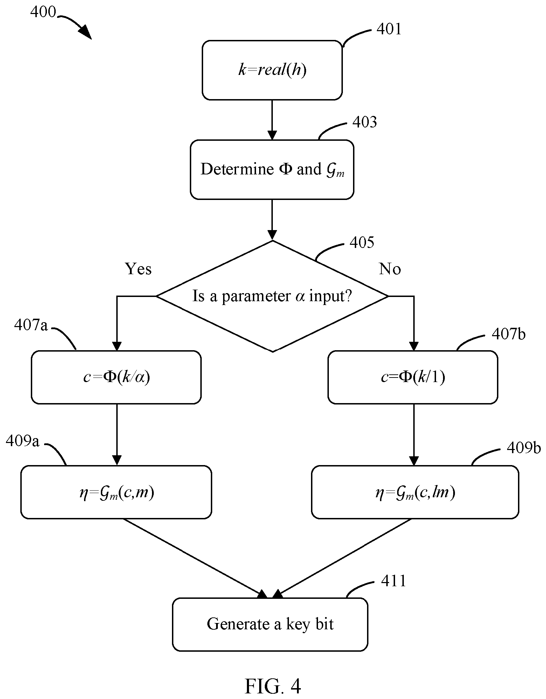

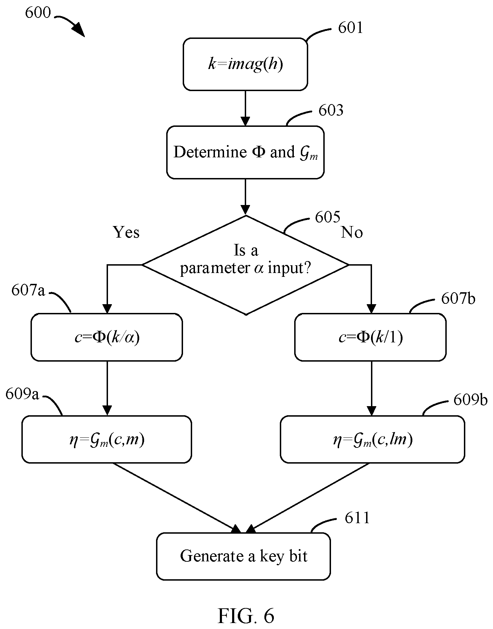

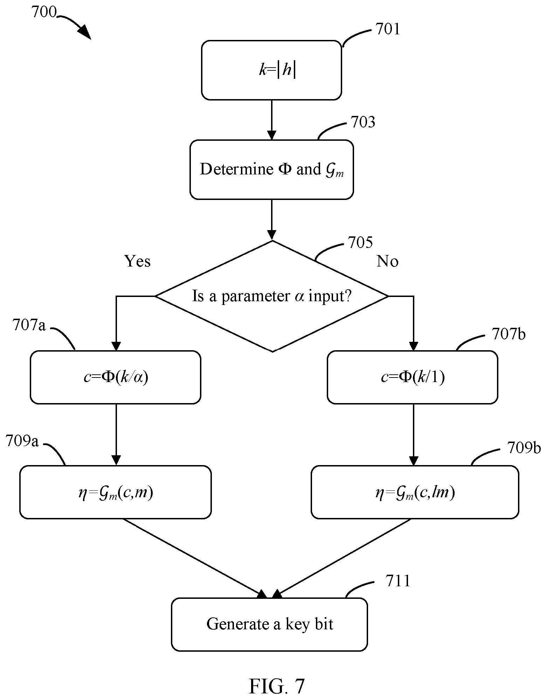

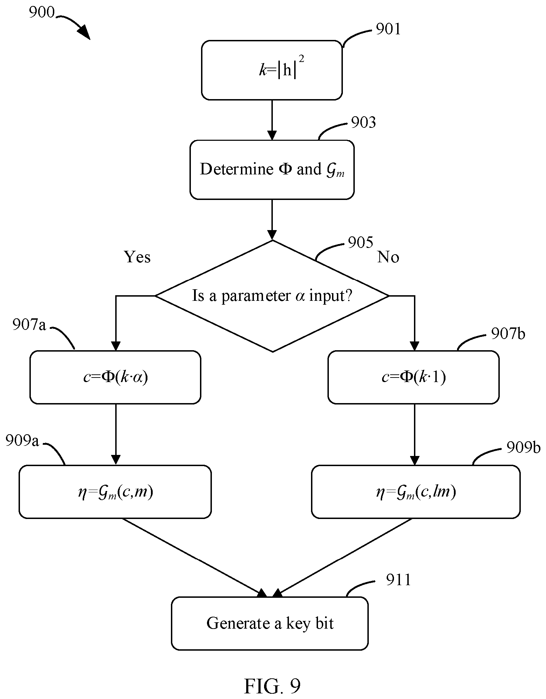

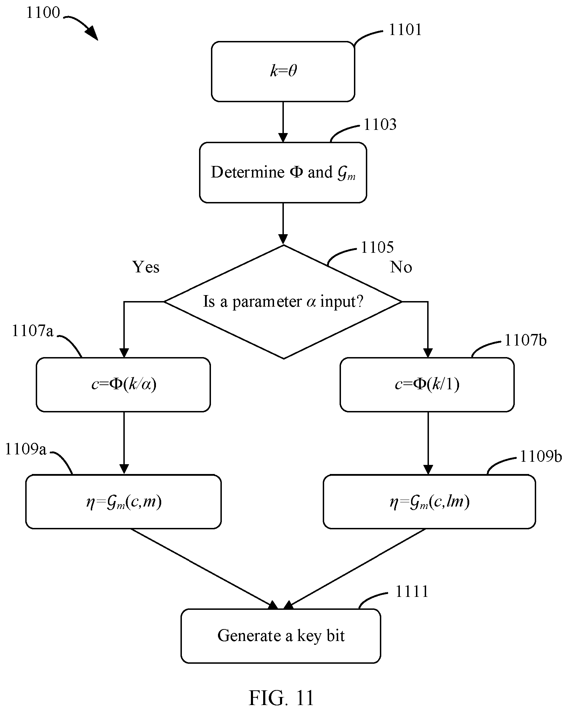

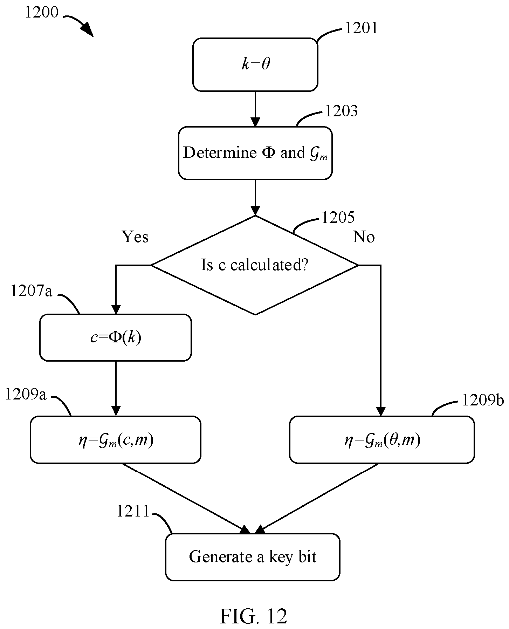

FIG. 4 (corresponding to Scenario 1), FIG. 6 (corresponding to Scenario 2), FIG. 7 (corresponding to Scenario 3), FIG. 9 (corresponding to Scenario 4), FIG. 11 (corresponding to Scenario 5), and FIG. 12 (corresponding to Scenario 6) respectively show procedures for determining a key in different scenarios. Embodiments corresponding to Scenario 1 to Scenario 6 respectively show how to extract randomness information from related information of a selected estimated channel and generate a key bit in five different mode selection manners. In Scenario 5 and Scenario 6, two implementation methods for extracting randomness information from an argument are provided.

FIG. 4 is a schematic flowchart of determining a key in an example scenario according to some other embodiments of the present disclosure. FIG. 4 shows a procedure 400 for determining a key in Scenario 1, and specifically describes how to extract randomness information k from a real part of an element value *h* of an estimated channel *H* based on a quotient group and quantize the randomness information. As shown in FIG. 4, after a first communication apparatus (for example, the first communication apparatus 210) determines a function Φ (an example of the second mapping function) and 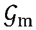 (an example of the first mapping function) based on a selected mode, there may be two implementations depending on whether an empirical distribution parameter α is input.

When the randomness information is extracted, based on the selected mode, from the real part of *h* for quantization, mathematical modeling of the real part of *h* needs to be considered. As shown in 401, the randomness information k=real(h). The real (real) part of *h* follows a Gaussian distribution, that is, $real \left(h\right) ∼ αN \left(0, 1\right)$

Functions Φ and 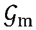 are determined (403). Specifically, the function Φ is constructed as a cumulative distribution function of a standard normal distribution as follows: $Φ \left(x\right) = \frac{1}{\sqrt{2 π}} {\int }_{- ∞}^{x} {e}^{- \frac{{t}^{2}}{2}} dt$

The function is used to map the real part of input *h* defined in a real number field ( 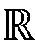 ) to an interval [0,1]. In addition to defining the function Φ, the function 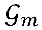 determined based on a quantization level m is also defined. The function needs to meet the following mapping relationship: ${G}_{m} : \left[0, 1\right] \times ℤ \to ℤ / mℤ = \left\{0,…,m-1\right\}$

A meaning of the mapping relationship is that the function 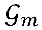 is used to map, based on an input parameter, a real number over the interval [0,1] to a quotient group of a discrete integer field. The function 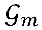 is specifically defined as follows: ${G}_{m} \left(a, b\right) = mod \left(\left⌊a∗b\right⌋, m\right)$

The quantization level m ≥ 2. The function 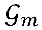 corresponds to the foregoing mapping relationship. A 1^{st} input parameter *α* ∈ [0,1], and a 2^{nd} input parameter $b ∈ ℤ$.

After the definitions of the functions Φ and 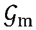 are determined, it is determined (405) whether the empirical distribution parameter α is input. A procedure of calculating a quantization result *η* may be implemented in two implementations depending on whether the empirical distribution parameter α is input:

Implementation 1: When α is input, normalization of the real part of h is completed by using α, and a normalized real part is used as an input of the function Φ. As shown in 407a, when k=real(h), $c = Φ \left(real\left(h\right)/α\right) ∼ {U}_{\left[0, 1\right]}$

In this case, distribution of c follows a uniform distribution over the interval [0,1], that is, 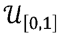 . *c* and *m* are input into the function 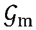 and can be mapped to the quotient group $ℤ / m ℤ$, to implement a discrete quantization process for following a uniform distribution. An expression substituted with the foregoing function 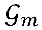 is calculated, as shown in 409a, to obtain: $η = {G}_{m} \left(c, m\right) = mod \left(\left⌊c∗m\right⌋, m\right)$

The *mod* function is a modulo operation, and is specifically defined as follows: $mod \left(a, m\right) = a - m ∗ floor \left(a/m\right)$

The floor function is used to round an input value to the nearest integer that is less than or equal to the input value.

The function 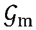 may be used to first scale a value over the interval [0,1] to [0,*m*], and then map to $ℤ / m ℤ$. If the value is not scaled to [0,*m*], each c is to be mapped as the integer 0 because *c* belongs to the interval [0,1]. The 2^{nd} input parameter of the function 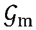 may alternatively be a positive integer multiple of m.

Implementation 2: When the empirical distribution parameter α is not input, α = 1 by default. The real part of *h* is directly used as an input value of the function Φ. As shown in 407b, when k=real(h), $c = Φ \left(real\left(h\right)\right)$

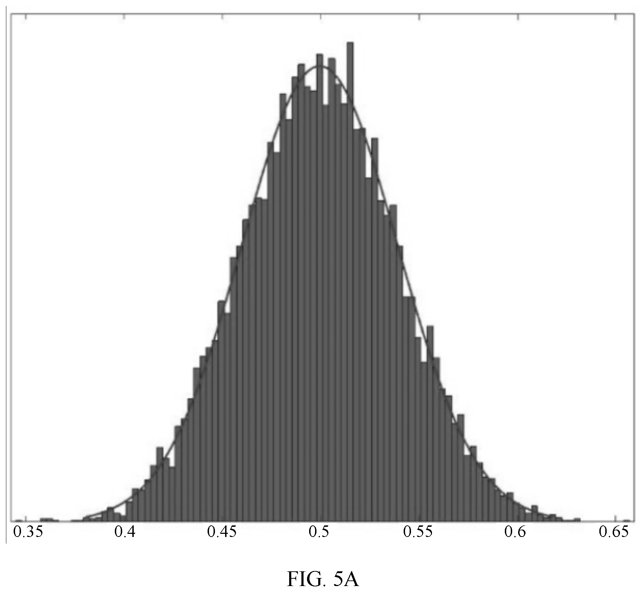

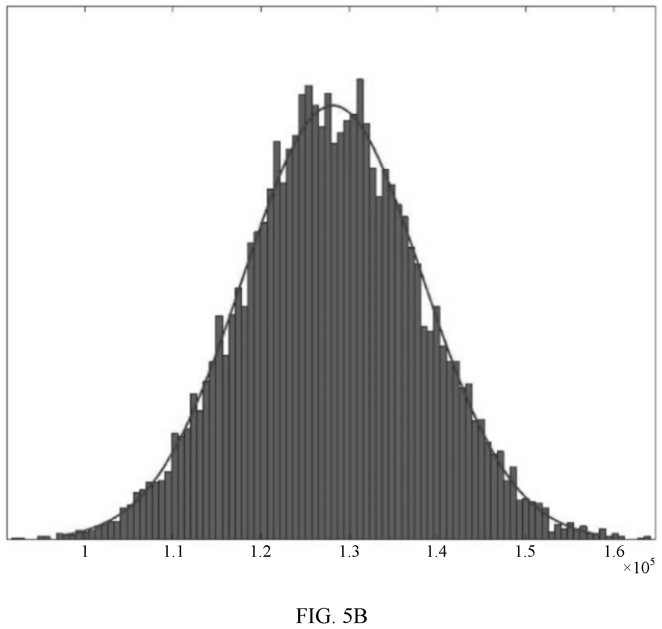

In this case, c has a value range of an interval *I* ⊆ [0,1], and follows a bell curve distribution, and a parameter is unknown. In this scenario, c is mapped to the quotient group $ℤ / m ℤ$, and it is ensured that an output integer *η* follows a uniform distribution. The function 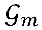 needs to be used to scale c in I to an interval [0, *lm*]*,* where *l* is a positive integer and *l* may be greater than or equal to 40. For example, a value of *l* may be 1000 (1000 is an example of a preset threshold) and is an integer. After amplification by a multiple, the output integer *η* can follow a uniform distribution, which mainly benefits from a difference between group homomorphism-based calculation and a conventional solution (in which quantization is performed based on a threshold, so that an entire interval between adjacent thresholds has a same quantization result). Based on group homomorphism-based calculation, two adjacent high-probability values (for example, values close to middle positions of bell curves in FIG. 5A and FIG. 5B) can be mapped to different integer values. An expression substituted with *η* is calculated, as shown in 409b: $η = {G}_{m} \left(c, lm\right) = mod \left(\left⌊c∗lm\right⌋, m\right)$

A value of a 2^{nd} input parameter used in the function *mod* is a subscript of 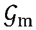 , that is, the quantization level m, and does not change with Gₘ(c,lm). FIG. 5A and FIG. 5B are examples of distribution that an output of the second mapping function follows. FIG. 5A is a bell distribution curve over the interval [0,1], and FIG. 5B is a bell distribution curve after scaling to the interval [0, *lm*]*.* It can be learned that scaling does not change a shape of the curve.

After the quantization result $η ∈ ℤ / m ℤ$ is obtained, the quantization result needs to be converted into a binary bit string bits*_{η}* ∈ {0,1}, that is, a key bit, to determine (411) a physical layer key.

FIG. 6 is a schematic flowchart of determining a key in an example scenario according to still some other embodiments of the present disclosure. FIG. 6 shows a procedure 600 for determining a key in Scenario 2. In the procedure 600, a first communication apparatus (for example, the foregoing first communication apparatus 210) extracts randomness information from an imaginary part of an element value h of an estimated channel H, and quantizes the randomness information. After a function Φ (an example of the second mapping function) and 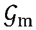 (an example of the first mapping function) are determined based on a selected mode, there are two implementations depending on whether an empirical distribution parameter α is input. When the randomness information is extracted, based on the selected mode, from the imaginary part of *h,* for quantization, mathematical modeling of the imaginary part of *h* needs to be considered. As shown in 601, k=imag(h). If *h* follows a complex Gaussian distribution, a modeling manner of the imaginary (imag) part of *h* is the same as that of the real part of *h* in Scenario 1, and both of the real part and the imaginary part follow a Gaussian distribution, that is, $imag \left(h\right) ∼ αN \left(0, 1\right)$

Functions Φ and 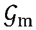 are determined (603). Specifically, the function Φ is constructed as a cumulative distribution function of a standard normal distribution as follows: $Φ \left(x\right) = \frac{1}{\sqrt{2 π}} {\int }_{- ∞}^{x} {e}^{- \frac{{t}^{2}}{2}} dt$

The function Φ is used to map the imaginary part of input *h* defined in a real number field ( 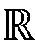 ) to an interval [0,1]. Herein, 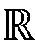 is a domain of Gaussian distribution, and is irrelevant to whether information is from the real part or the imaginary part. Both information from the real part and information from the imaginary part are real numbers. In addition to defining the function Φ, the function 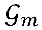 determined based on a quantization level m is also defined. The function 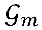 meets the following mapping relationship: ${G}_{m} : \left[0, 1\right] \times ℤ \to ℤ / mℤ = \left\{0,…,m-1\right\}$

In other words, the function is used to map, based on an input parameter, a real number in the interval [0, 1] to a quotient group of a discrete integer field. It should be noted that a definition of the function 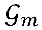 is determined only based on the quantization level *m,* and is irrelevant to mode selection (that is, what information amount of h is used an input source for extracting the randomness information). Therefore, for how to specifically define the function 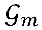 based on the quantization level m, refer to the expression of 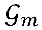 in Scenario 1.

After the definitions of the functions Φ and 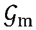 are determined, it is determined (605) whether the empirical distribution parameter α is input. A procedure of calculating a quantization result *η* may be implemented in two implementations depending on whether the empirical distribution parameter α is input:

In a first implementation, when α is input, normalization of the imaginary part of *h* is completed by using α, and a normalized imaginary part is used as an input of the function Φ. As shown in 607a, when k=imag(h), $c = Φ \left(imag\left(h\right)/α\right) ∼ {U}_{\left[0, 1\right]}$

In this case, distribution of c follows a uniform distribution over the interval [0, 1], that is, 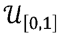 . c and m are input into the function 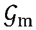 , and can be mapped to the quotient group $ℤ / m ℤ$, to implement a discrete quantization process for following a uniform distribution. An expression substituted with *η* is calculated, as shown in 609a: $η = {G}_{m} \left(c, m\right) = mod \left(\left⌊c∗m\right⌋, m\right)$

An effect of the function 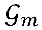 , is to first scale a value in the interval [0, 1] to *[0,m],* and then map to $ℤ / m ℤ$. If the value is not scaled to [0,*m*], each c is to be mapped as the integer 0 because c belongs to the interval [0, 1]. A 2^{nd} input parameter of the function 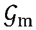 may alternatively be a positive integer multiple of m.

In the other implementation, when the empirical distribution parameter α is not input, α = 1 by default. The imaginary part of *h* is directly used as an input value of the function Φ. As shown in 607b, when k=imag(h), $c = Φ \left(imag\left(h\right)\right)$

In this case, c has a value range of an interval *I* ⊆ [0,1], and follows a bell function distribution, and a parameter is unknown. In this scenario, c is mapped to the quotient group $ℤ / m ℤ$, and it is ensured that an output integer *η* follows a uniform distribution. The function 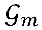 needs to be used to scale c in I to an interval [0*,lm*], where *l* is a positive integer and *l* may be greater than or equal to 40. For example, a value of *l* may be 1000. After amplification by a multiple, the output integer *η* can follow a uniform distribution. For details, refer to the foregoing related description of Scenario 1. An expression substituted with *η* is calculated. As shown in 609b, when k=real(h), $η = {G}_{m} \left(c, lm\right) = mod \left(\left⌊c∗lm\right⌋, m\right)$

A value of a 2^{nd} input parameter used in the function *mod* is a subscript of 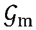 , that is, the quantization level m, and does not change with 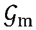 (*c, lm*)*.* After the quantization result $η ∈ ℤ / m ℤ$ is obtained, the quantization result may be converted into a binary bit string bits*_{η}* ∈ {0,1}, that is, a key bit, to determine (611) a physical layer key.

FIG. 7 is a schematic flowchart of determining a key in an example scenario according to still some other embodiments of the present disclosure. FIG. 7 shows a procedure 700 for determining a key in Scenario 3. In the procedure 700, a first communication apparatus (for example, the foregoing first communication apparatus 210) extracts randomness information from a modulus of an element value *h* of an estimated channel H and quantize the randomness information. Specifically, when the randomness information is extracted, based on a selected mode, from the modulus of *h* for quantization, mathematical modeling of the modulus of *h* needs to be considered. As shown in 701, k=|*h*|. If *h* follows a complex Gaussian distribution, the modulus of *h* follows a Rayleigh distribution, that is, $\left|h\right| ∼ f \left(x; σ\right) = \frac{x}{{σ}^{2}} {e}^{- \frac{{x}^{2}}{2 {σ}^{2}}} , x \geq 0 \left(that is, x∈{ℝ}_{+}∪\left\{0\right\}\right)$

Functions Φ and 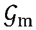 are determined (703). Specifically, because an input information source follows a Rayleigh distribution, the function Φ is correspondingly constructed as being of a standard Rayleigh distribution, that is, a cumulative distribution function when a parameter σ = 1, as follows: $Φ \left(x\right) = 1 - {e}^{- \frac{{x}^{2}}{2}} , x \geq 0$

A domain of a Rayleigh distribution is a non-negative real number field ( ${ℝ}_{+} ∪ \left\{0\right\}$). Therefore, the function Φ herein is used to map input information in the non-negative real number field, that is, the modulus of *h,* to an interval [0, 1]. In addition to defining the function Φ, the function 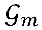 determined based on a quantization level m is also defined. The function 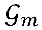 meets the following mapping relationship: ${G}_{m} : \left[0, 1\right] \times ℤ \to ℤ / mℤ = \left\{0,…,m-1\right\}$

In other words, the function 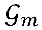 is used to map, based on an input parameter, a real number in the interval [0,1] to a quotient group of a discrete integer field. For details about how to define the function 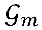 , refer to the related descriptions in Scenario 1. After the definitions of the functions Φ and 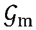 are determined, it is determined (705) whether an empirical distribution parameter α is input. A procedure of calculating a quantization result *η* be implemented in two implementations depending on whether the empirical distribution parameter α is input:

In a first implementation, when α is input, normalization of the modulus of *h* is completed by using α, and a normalized modulus is used as an input of the function Φ. As shown in 707a, when k=|h|, $c = Φ \left(\left|h\right|/α\right) ∼ {U}_{\left[0, 1\right]}$

In this case, distribution of c follows a uniform distribution over the interval [0, 1], that is, 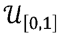 . c and m are input into the function 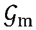 , and can be mapped to the quotient group $ℤ / m ℤ$*,* to implement a discrete quantization process for following a uniform distribution. An expression substituted with *η* is calculated, as shown in 709a, to obtain: $η = {G}_{m} \left(c, m\right) = mod \left(\left⌊c∗m\right⌋, m\right)$

An effect of the function 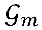 is to first scale a value in the interval [0, 1] to [0, m], and then map to $ℤ / m ℤ$*.* If the value is not scaled to [0, *m*], each c is to be mapped as the integer 0 because c belongs to the interval [0, 1]. In some examples, a 2^{nd} input parameter of the function 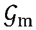 may alternatively be a positive integer multiple of *m.*

In a second implementation, when the empirical distribution parameter α is not input, α = 1 by default. The modulus of *h* is directly used as an input value of the function Φ. As shown in 707b, when k=|*h*|, $c = Φ \left(\left|h\right|\right)$

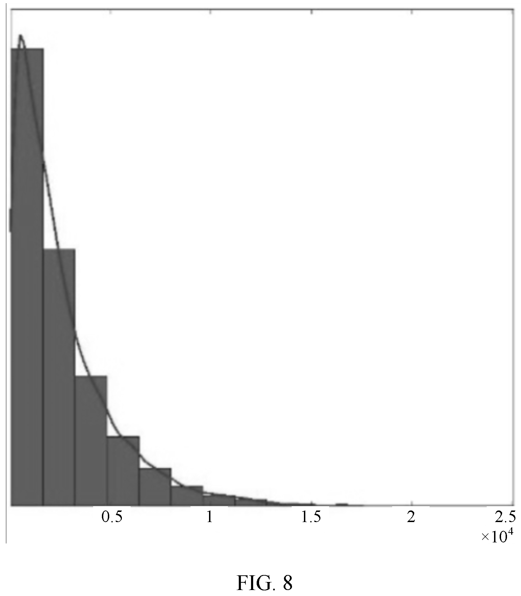

In this case, c has a value range of an interval I ⊆ [0,1], and follows an exponential curve distribution, and a parameter is unknown. An exponential distribution curve is shown in FIG. 8, and is an example of distribution that an output of a second mapping function follows. In this scenario, c is mapped to the quotient group $ℤ / m ℤ$, and it is ensured that an output integer *η* follows a uniform distribution. The function 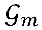 needs to be used to scale c in *I* to an interval [*0, lm*]*,* where *l* is an integer and *l* may be greater than or equal to 40. For example, a value of *l* may be 1000. After amplification by a multiple, the output integer *η* can follow a uniform distribution. Based on group homomorphism-based calculation, two adjacent high-probability values (for example, values close to the left of exponential distribution) can be mapped to different integer values. An expression substituted with *η* is calculated, as shown in 709b, to obtain: $η = {G}_{m} \left(c, lm\right) = mod \left(\left⌊c∗lm\right⌋, m\right)$

A value of a 2^{nd} input parameter used in the function *mod* is a subscript of 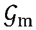 , that is, the quantization level *m,* and does not change with 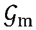 (*c, lm*)*.* After the quantization result $η ∈ ℤ / m ℤ$ is obtained, the quantization result needs to be converted into a binary bit string bits*_{η}* ∈ {0,1}, that is, a key bit, to determine (711) a physical layer key.

FIG. 9 is a schematic flowchart of determining a key in an example scenario according to still some other embodiments of the present disclosure. FIG. 9 shows a procedure 900 for determining a key in Scenario 4. In the procedure 900, a first communication apparatus (for example, the foregoing first communication apparatus 210) extracts randomness information from a square of a modulus of an element value *h* of an estimated channel H and quantize the randomness information. Specifically, when the randomness information is extracted, based on a selected mode, from the square of the modulus of *h* for quantization, mathematical modeling of the square of the modulus of *h* is considered. As shown in 901, k=|*h*|². If *h* follows a complex Gaussian distribution, the square of the modulus of *h* follows an exponential distribution, that is, $\left|{h}^{2}\right| ∼ f \left(x; λ\right) = {λe}^{- λx} , x \geq 0 \left(that is, x∈{ℝ}_{+}∪\left\{0\right\}\right)$

Functions Φ and 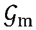 are determined (903). Specifically, because an input information source (that is, the square of the modulus of *h*) in this example follows an exponential distribution, the function Φ is constructed as follows: $Φ \left(x\right) = {e}^{- x} , x \geq 0$

A domain of exponential distribution is a non-negative real number field ( ${ℝ}_{+} ∪ \left\{0\right\}$). The function Φ herein is used to map input information in the non-negative real number field, that is, the square of the modulus of h, to an interval [0, 1]. In addition to defining the function Φ, the function 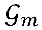 determined based on a quantization level m is also defined. The function meets the following mapping relationship: ${G}_{m} : \left[0, 1\right] \times ℤ \to ℤ / mℤ = \left\{0,…,m-1\right\}$

In other words, the function is used to map, based on an input parameter, a real number in the interval [0, 1] to a quotient group of a discrete integer field. For details about how to define the function 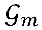 based on the quantization level m, refer to the descriptions of 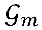 and the expression of 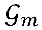 in other embodiments.

After the definitions of the functions Φ and 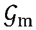 are determined, it is determined (905) whether an empirical distribution parameter α is input. A procedure of calculating a quantization result *η* includes two branches depending on whether the empirical distribution parameter α is input. In Branch 1, the empirical distribution parameter α is input, and in Branch 2, the empirical distribution parameter α is not input. Specifically, in Branch 1, when α is input, normalization of the square of the modulus of *h* is completed by using α, and a normalized square of the modulus is used as an input of the function Φ. As shown in 907a, when k=|h|², $c = Φ \left({\left|h\right|}^{2}⋅α\right) ∼ {U}_{\left[0, 1\right]}$

In this case, distribution of c follows a uniform distribution over the interval [0, 1], that is, 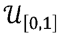 . c and *m* are input into the function 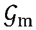 , and can be mapped to the quotient group $ℤ / m ℤ$*,* to implement a discrete quantization process for following a uniform distribution. An expression substituted with *η* is calculated, as shown in 909a, to obtain: $η = {G}_{m} \left(c, m\right) = mod \left(\left⌊c∗m\right⌋, m\right)$

An effect of the function 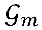 is to first scale a value in the interval [0,1] to [0,*m*], and then map to $ℤ / m ℤ$. If the value is not scaled to [0,*m*], each c is to be mapped as the integer 0 because c belongs to the interval [0, 1]. A 2^{nd} input parameter of the function 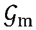 may alternatively be a positive integer multiple of *m.*

In Branch 2, when the empirical distribution parameter α is not input, α = 1 by default. The square of the modulus of *h* is directly used as an input value of the function Φ. As shown in 907b, when k=|*h*|², $c = Φ \left({\left|h\right|}^{2}\right)$

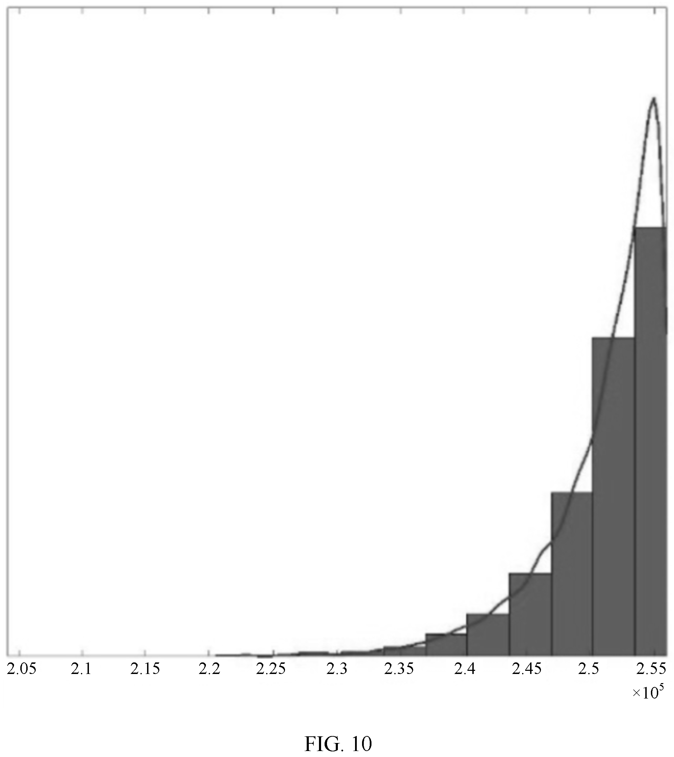

In this case, c has a value range of an interval *I* ⊆ [0,1], and follows a quasi-exponential curve distribution, and a parameter is unknown. A quasi-exponential curve distribution curve is shown in FIG. 10, and is an example of distribution that an output of a second mapping function follows. The quasi-exponential curve distribution is used herein because a probability of general exponential curve distribution decreases with an increase in a random variable, while actual distribution of c is opposite, that is, a probability increases with an increase in a random variable. In this scenario, c is mapped to the quotient group $ℤ / m ℤ$, and it is ensured that an output integer *η* follows a uniform distribution. The function 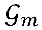 needs to be used to scale c in I to an interval [0*,lm*], where *l* is an integer and *l* may be greater than or equal to 40. For example, a value of *l* may be 1000. After amplification by a multiple, the output integer *η* can follow a uniform distribution. For details, refer to the descriptions of the foregoing embodiments. Based on group homomorphism-based calculation, two adjacent high-probability values (for example, values close to the right of quasi-exponential curve distribution) can be mapped to different integer values. An expression substituted with *η* is calculated, as shown in 909b, to obtain: $η = {G}_{m} \left(c, lm\right) = mod \left(\left⌊c∗lm\right⌋, m\right)$

A value of a 2^{nd} input parameter used in the function *mod* is a subscript of 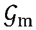 , that is, the quantization level m, and does not change with 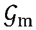 (*c, lm*)*.* After the quantization result $η ∈ ℤ / m ℤ$ is obtained, the quantization result needs to be converted into a binary bit string bits*_{η}* ∈ {0,1}, that is, a key bit, to determine (911) a physical layer key.

FIG. 11 is a schematic flowchart of determining a key in an example scenario according to still some other embodiments of the present disclosure. FIG. 11 shows a procedure 1100 for determining a key in Scenario 5. In the procedure 1100, a first communication apparatus (for example, the foregoing first communication apparatus 210) extracts randomness information from an argument *θ* of an element value *h* of an estimated channel H and quantize the randomness information. When the randomness information is extracted, based on a selected mode, from the argument of *h* for quantization, mathematical modeling of the argument of *h* is considered. As shown in 1101, k=θ. If *h* follows a complex Gaussian distribution, the argument of *h* follows a uniform distribution, that is, $θ ∼ {U}_{\left[0, α\right]}$

Based on a value range of the argument, it can be learned that α = 2π. Functions Φ and 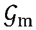 are determined (1103). Specifically, an input information source herein follows a uniform distribution. In this example, the function Φ is constructed without a cumulative fraction function of a uniform distribution over an interval [0,1], and may be defined as follows: $Φ \left(x\right) = x$

In addition to defining the function Φ, the function 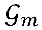 determined based on a quantization level m also needs to be defined. The function meets the following mapping relationship: ${G}_{m} : \left[0, 1\right] \times ℤ \to ℤ / mℤ = \left\{0,…,m-1\right\}$

In other words, the function is used to map, based on an input parameter, a real number over an interval [0,2π] to a quotient group of a discrete integer field. For details about how to define the function 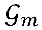 based on the quantization level *m,* refer to the foregoing other embodiments.

In the foregoing some embodiments, a value range of the real part or the imaginary part of *h* is a real number field ( $ℝ = \left(-∞,∞\right)$). In some embodiments, value ranges of the modulus and the square of the modulus of *h* are non-negative real number fields ( ${ℝ}_{+} ∪ \left\{0\right\} = \left[0, ∞\right)$). In this example, the value range of the argument of h is [0,2π], and ±∞ is not involved. After the functions Φ and 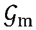 are determined based on the selected mode, it is determined (1105) whether an empirical distribution parameter α is input. There are two implementations depending on whether the empirical distribution parameter α is input.

In Implementation 1, when the empirical distribution parameter α is input, normalization of the argument of h is completed by using α, and a normalized argument is used as an input of the function Φ. As shown in 1107a, when k=θ, $c = Φ \left(θ/α\right) ∼ {U}_{\left[0, 1\right]}$

In this case, distribution of c follows a uniform distribution over the interval [0, 1], that is, 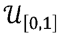 . c and m are input into the function 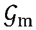 , and can be mapped to the quotient group $ℤ / m ℤ$, to implement a discrete quantization process for following a uniform distribution. An expression substituted with *η* is calculated, as shown in 1109a, to obtain: $η = {G}_{m} \left(c, m\right) = mod \left(\left⌊c∗m\right⌋, m\right)$

An effect of the function 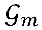 is to first scale a value in the interval [0, 1] to [0, m], and then map to $ℤ / m ℤ$*.* If the value is not scaled to [0, *m*], each c is to be mapped to as integer 0 because c belongs to the interval [0, 1]. A 2^{nd} input parameter of the function 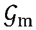 may alternatively be a positive integer multiple of *m.*

In Implementation 2, when the empirical distribution parameter α is not input, α = 1 by default. The argument of *h* is directly used as an input value of the function Φ. As shown in 1107b, when k=θ, $c = Φ \left(θ\right)$

In this case, c has a value range of an interval I, and follows a uniform distribution, but a parameter is unknown. The interval I is not a subinterval of the interval [0, 1]. In this scenario, c is mapped to the quotient group $ℤ / m ℤ$, and it is ensured that an output integer *η* follows a uniform distribution. The function 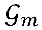 needs to be used to scale c in I to an interval [0, *lm*]*,* where *l* is an integer and *l* may be greater than or equal to 40. For example, a value of *l* may be 1000. After amplification by a multiple, the output integer *η* can follow a uniform distribution, which mainly benefits from a difference between group homomorphism-based calculation and a conventional solution (in which quantization is performed based on a threshold, so that an entire interval between adjacent thresholds has a same quantization result). Based on group homomorphism-based calculation, two adjacent high-probability values can be mapped to different integer values. An expression substituted with *η* is calculated, as shown in 1109b, to obtain: $η = {G}_{m} \left(c, lm\right) = mod \left(\left⌊c∗lm\right⌋, m\right)$

A value of a 2^{nd} input parameter used in the function *mod* is a subscript of 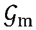 , that is, the quantization level *m,* and does not change with 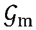 (*c, lm*)*.* After the quantization result $η ∈ ℤ / m ℤ$ is obtained, the quantization result needs to be converted into a binary bit string bits*_{η}* ∈ {0,1}, that is, a key bit, to determine (1111) a physical layer key. In this embodiment, because a statistical distribution of the argument is already a uniform distribution, the function Φ in the calculation procedure is defined as an identity function, and no redundant calculation amount is introduced.

FIG. 12 is a schematic flowchart of determining a key in an example scenario according to still some other embodiments of the present disclosure. FIG. 12 shows a procedure 1200 for determining a key in Scenario 6. The procedure 1200 provides another possibility of extracting randomness information from an argument of *h* h, which is different from that in the procedure 1100. A function Φ in the procedure 1200 is different from the function defined in the procedure 1100, and the function Φ in the procedure 1200 is no longer defined as an identity function. The procedure 1200 may be performed by the first communication apparatus 210. When the randomness information is extracted, based on a selected mode, from the argument of *h* for quantization, mathematical modeling of the argument of h needs to be considered. As shown in 1201, k=θ. If *h* follows a complex Gaussian distribution, the argument of *h* follows a uniform distribution, that is, $θ ∼ {U}_{\left[0,2π\right]}$

Functions Φ and 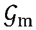 are determined (1203). Specifically, in this example, an input information source (that is, the argument of h) follows a uniform distribution. Because a distribution statistical parameter is known to be 2π, a cumulative fraction function of a uniform distribution over an interval [0,2π] is introduced, to define and construct the function Φ as follows: $Φ \left(x\right) = \frac{x}{2 π}$

The function Φ is used to map input information in the interval [0,2π], that is, the argument of *h,* to an interval [0, 1]. In addition to defining the function Φ, the function 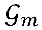 determined based on a quantization level m is also defined. The function meets the following mapping relationship: ${G}_{m} : \left[0, 1\right] \times ℤ \to ℤ / mℤ = \left\{0,…,m-1\right\}$

The function is used to map, based on an input parameter, a real number in the interval [0, 1] to a quotient group of a discrete integer field. For details about how to define the function 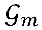 based on the quantization level m, refer to the foregoing other embodiments. After the definitions of the functions Φ and 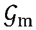 are determined, it is determined (1205) whether c is calculated. A procedure for calculating a quantization result *η* is implemented in two subprocedures depending on whether *c* is calculated.

In Sub-procedure 1, when c is calculated, the argument of *h* is directly used as an input of the function Φ, as shown in 1207a: $c = Φ \left(θ\right) ∼ {U}_{\left[0, 1\right]}$

In this case, distribution of c follows a uniform distribution over the interval [0, 1], that is, 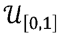 . c and m are input into the function 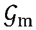 , and can be mapped to the quotient group $ℤ / m ℤ$, to implement a discrete quantization process for following a uniform distribution. An expression substituted with *η* is calculated, as shown in 1209a: $η = {G}_{m} \left(c, m\right) = mod \left(\left⌊c∗m\right⌋, m\right)$

An effect of the function 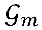 is to first scale a value in the interval [0,1] to [0,*m*], and then map to $ℤ / m ℤ$. If the value is not scaled to [0,*m*], each c is to be mapped as the integer 0 because c belongs to the interval [0,1]. A 2^{nd} input parameter of the function 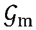 may alternatively be a positive integer multiple of *m*.

When c is not calculated, the argument of h is directly used as an input value of the function 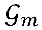 to calculate a quantization value *η*, as shown in 1209b: $η = {G}_{m} \left(c, lm\right) = mod \left(\left⌊c∗lm\right⌋, m\right)$

In this scenario, c is mapped to the quotient group $ℤ / m ℤ$, and it is ensured that an output integer *η* follows a uniform distribution. The function 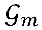 needs to be used to scale c in I to an interval [0,*lm*], where *l* is an integer and *l* may be greater than or equal to 40. For example, a value of *l* may be 1000. After amplification by a multiple, the output integer *η* can follow a uniform distribution, which mainly benefits from a difference between group homomorphism-based calculation and a conventional solution (in which quantization is performed based on a threshold, so that an entire interval between adjacent thresholds has a same quantization result). Based on group homomorphism-based calculation, two adjacent high-probability values can be mapped to different integer values. For details, refer to the descriptions in the foregoing other embodiments.

After the quantization result $η ∈ ℤ / m ℤ$ is obtained, the quantization result needs to be converted into a binary bit string bits*_{η}* ∈ {0,1}, that is, key bits, to determine (1211) a physical layer key as input information of an encryption solution.

*h* in some or all embodiments in Scenario 1 to Scenario 6 represents an element value of an estimated channel matrix. In some embodiments, selection of the element value in the estimated channel matrix may be determined based on signaling exchange between a receive end and a transmit end. For example, the first communication apparatus 210 sends an index of *h* to the second communication apparatus 220, or the second communication apparatus 220 sends an index of *h* to the first communication apparatus 210. The first communication apparatus 210 and the second communication apparatus 220 may further exchange other configured signaling, for example, mode selection t and a quantization level m. The mode selection t indicates a selected mode. As described in the foregoing embodiments, the mode may be determined based on a channel condition. For example, based on the channel condition, one mode may correspond to one of Scenario 1 to Scenario 6.

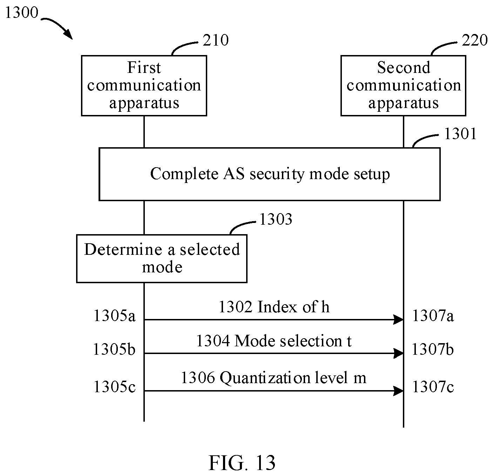

FIG. 13 is a schematic flowchart of configuring signaling in an example scenario according to some embodiments of the present disclosure. In a procedure 1300 shown in FIG. 13, a first communication apparatus 210 is, for example, one of a terminal device 110 (for example, UE) or a network device 120 (for example, a base station), and the second communication apparatus 220 is, for example, the other of the terminal device 110 or the network device 120. In some embodiments, the first communication apparatus 210 serves as a transmit end, and the second communication apparatus 220 serves as a receive end. For example, the first communication apparatus 210 calculates and selects mode selection t, and sends the mode selection t to the second communication apparatus 220. In some other embodiments, the second communication apparatus 220 serves as a transmit end, and the first communication apparatus 210 serves as a receive end. For example, the second communication apparatus 220 calculates and selects mode selection t, and sends the mode selection t to the first communication apparatus 210. A signaling configuration may be specifically configured on RRC, MAC, or a physical downlink control channel (physical downlink control channel, PDCCH) of PHY, and may be, for example, indicated by a base station (an example of one of the first communication apparatus 210 or the second communication apparatus 220) to UE (an example of the other of the first communication apparatus 210 or the second communication apparatus 220), or may be reported by the UE to the base station. If a plurality of rounds of interaction are performed between the base station and the UE, the configuration may be sent in each round of interaction, or the configuration may be sent only in one round of interaction, and the configuration is used by default in subsequent rounds of interaction. An example of signaling may include an index of *h*, used by the transmit end and the receive end to select a same element value *h* from an estimated channel matrix H, to extract randomness information and quantize the randomness information to generate a key. An example of the signaling may alternatively include mode selection *t*, used to select, based on a channel condition, one of a real part, an imaginary part, a modulus, a square of a modulus, and an argument of the element value in the estimated channel matrix, to obtain channel randomness information. An example of the signaling may alternatively include a quantization level *m* determined based on a channel condition, used to determine 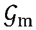 (an example of a first mapping function). In some examples, when the channel condition changes, a more appropriate mode may be selected, and information about the updated mode is sent to the other communication party by exchanging signaling.

In the embodiment shown in FIG. 13, the foregoing configuration is notified or updated through signaling exchange. In another embodiment, the foregoing configuration may not be formulated by exchanging signaling between the transmit end and the receive end, but may be formulated according to a protocol and stored in both the transmit end and the receive end. As an example, the procedure 1300 includes: after access stratum (access stratum, AS) security mode setup is completed (1301), the first communication apparatus 210 determines (1303) a selected mode. The first communication apparatus 210 sends (1305a) an index 1302 of *h*, and the second communication apparatus 220 receives (1307a) the index. Optionally or alternatively, the first communication apparatus 210 sends (1305b) mode selection *t* (t indicates the selected mode) (1304) and the second communication apparatus 220 receives (1307b) the mode selection *t.* Optionally or alternatively, the first communication apparatus 210 sends (1305c) a quantization level *m* (1306) and the second communication apparatus 220 receives (1307c) the quantization level *m*.

According to the solution for determining a key based on a quotient group in embodiments of the present disclosure, information used to generate a key is extracted from a radio channel. When empirical distribution of an estimated channel or related information can be obtained, conversion into a uniform distribution may be performed by using a cumulative distribution function of a standard distribution of corresponding information, and information in a continuous real number field is quantized into a key in a discrete integer field through mapping to the quotient group corresponding to a quantization level m. When empirical distribution of an estimated channel or related information cannot be obtained, after conversion by using a cumulative distribution function of a standard distribution of corresponding information, a key following a uniform distribution is obtained through mapping to the quotient group by amplifying a quantization level *m* by an integer multiple. Therefore, a physical layer key following a uniform distribution can be generated without obtaining an empirical distribution parameter of the estimated channel or the related information, thereby avoiding a necessity of obtaining the empirical distribution of the estimated channel or the related information. The calculation procedure in some embodiments of the present disclosure avoids extra computing overhead and extra processing latency. In particular, when accuracy of empirical distribution calculated based on collected noisy channel information cannot be ensured, the solution in embodiments of the present disclosure can effectively avoid a risk that a key obtained through quantization may not follow a uniform distribution because a threshold is set based on an empirical distribution parameter and the key is generated through quantization.

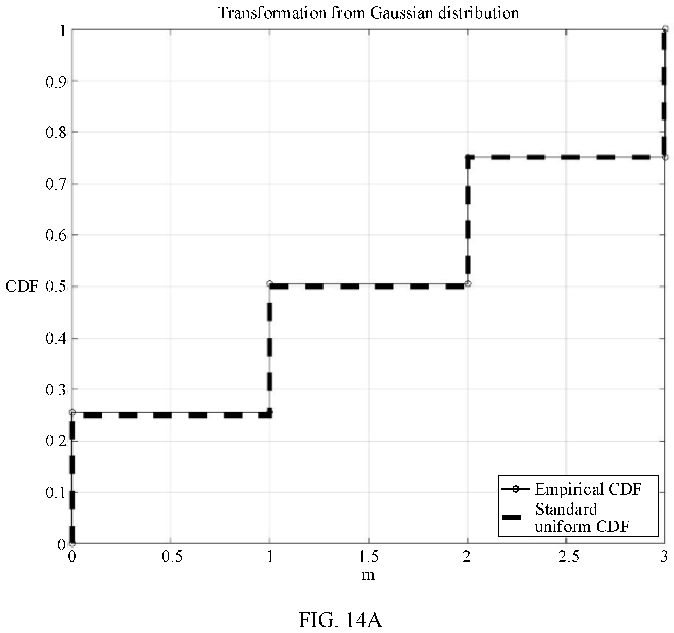

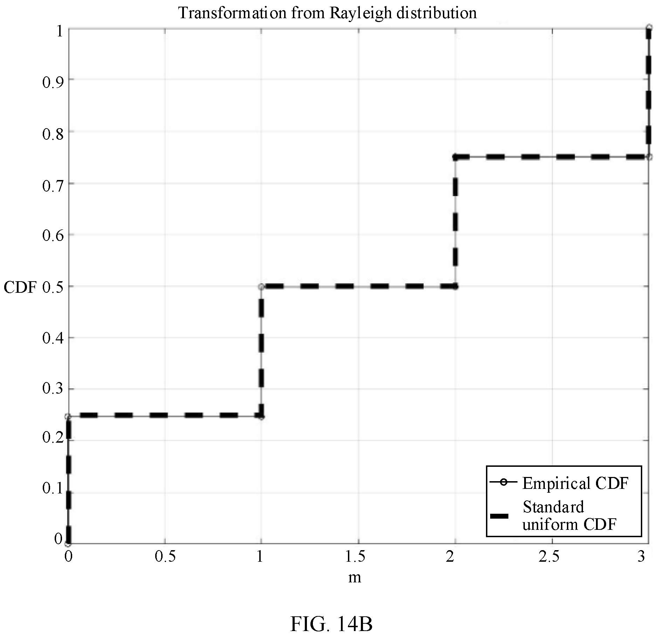

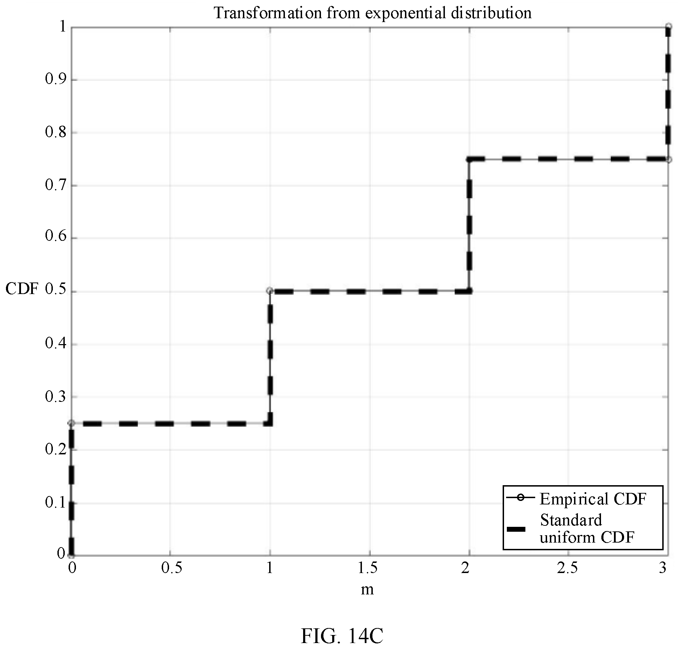

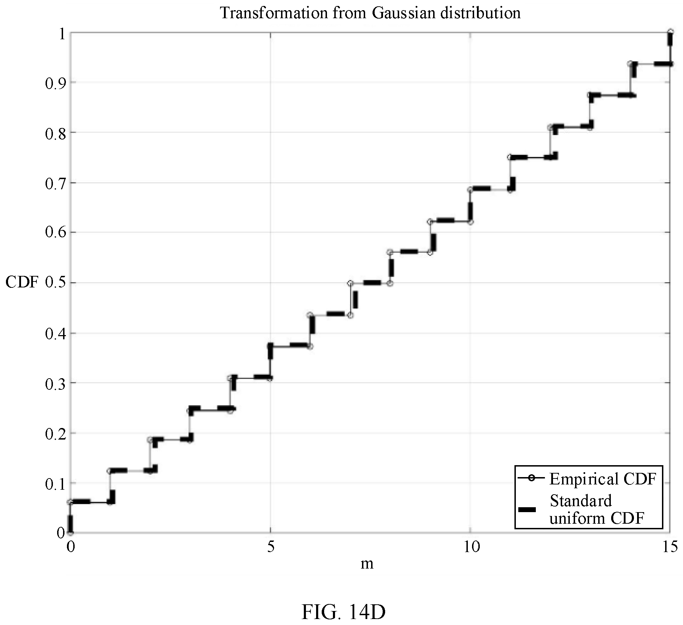

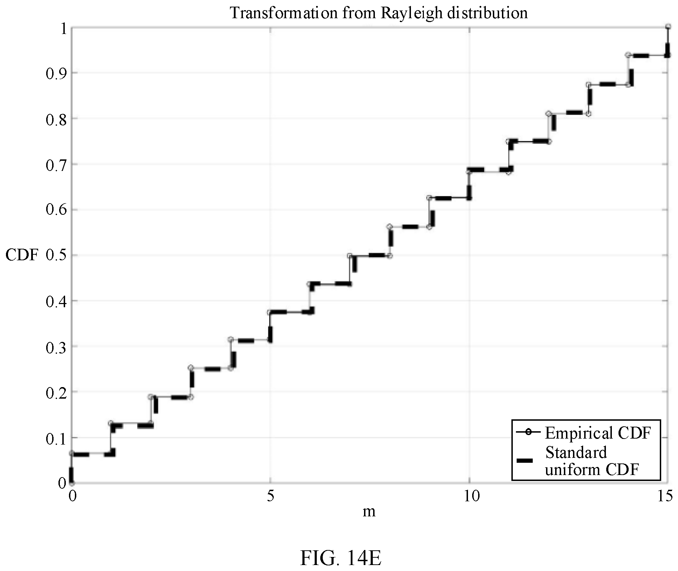

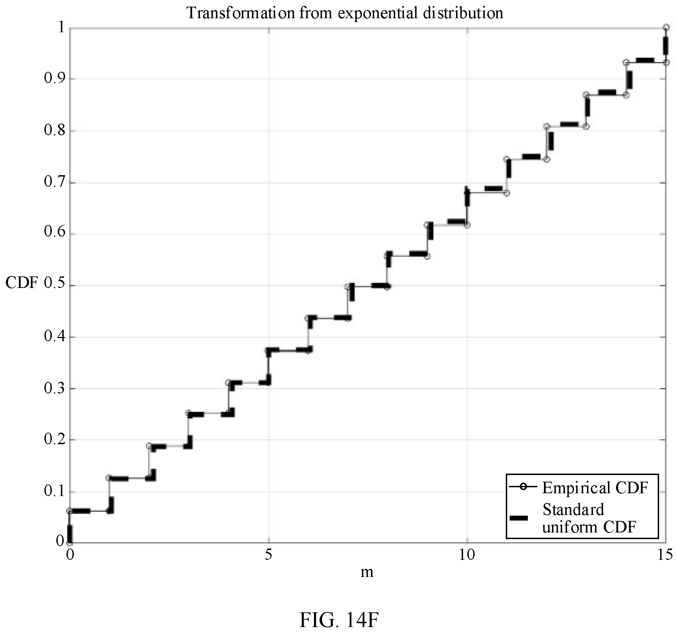

FIG. 14A to FIG. 14F are diagrams of comparison of simulation results according to some embodiments of the present disclosure. As shown in simulation in FIG. 14A to FIG. 14F, a cumulative distribution of quantization results is compared with a cumulative distribution of a discrete uniform distribution over an interval (0, m-1). A horizontal coordinate axis m represents a quantization level, and a vertical coordinate axis represents a cumulative distribution function (cumulative distribution function, CDF). Parameters used for simulation are specifically as follows: In FIG. 14A, FIG. 14B, and FIG. 14C, a quantization level m=4 is used, and in FIG. 14D, FIG. 14E, and FIG. 14F, a quantization level *m*=16 is used. Modes used in FIG. 14A, FIG. 14B, and FIG. 14C respectively correspond to a real part of *h*, a modulus of *h*, and a square of a modulus of *h*, and modes used in FIG. 14D, FIG. 14E, and FIG. 14F respectively correspond to a real part of *h*, a modulus of *h*, and a square of a modulus of *h*. In FIG. 14A to FIG. 14F, thick black dashed lines represent cumulative distribution functions of a statistical discrete uniform distribution, and thin solid lines with hollow circles represent quantization results in one of the foregoing three modes. FIG. 14A, FIG. 14B, and FIG. 14C correspond to a case in which an empirical distribution parameter is input, and FIG. 14D, FIG. 14E, and FIG. 14F correspond to a case in which an empirical distribution parameter is not input.

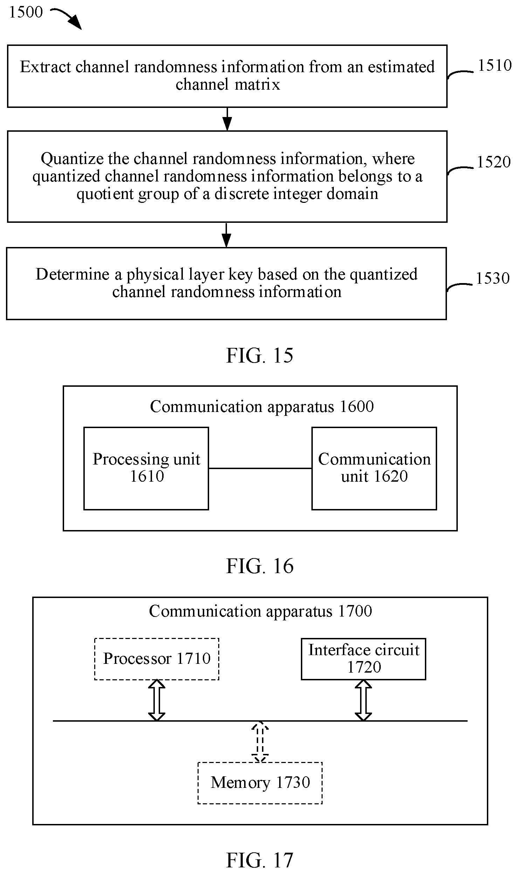

FIG. 15 is a schematic flowchart of implementation at a communication apparatus according to some embodiments of the present disclosure. As shown in FIG. 15, the communication apparatus that performs a procedure 1500 may be the first communication apparatus 210 or located in the first communication apparatus 210, for example, may be the terminal device 110 or a chip, a module, or a module group in the terminal device 110, or may be the network device 120 or a chip, a module, or a module group in the network device 120. In block 1510, the communication apparatus extracts channel randomness information from an estimated channel matrix. In block 1520, the communication apparatus quantizes the channel randomness information, where the quantized channel randomness information belongs to a quotient group of a discrete integer field. In block 1530, the communication apparatus determines a physical layer key based on the quantized channel randomness information. In some embodiments, the procedure 1500 may further include other operations performed at the first communication apparatus 210 described with reference to FIG. 2 to FIG. 13 in embodiments of the present disclosure.

FIG. 16 is a diagram of a structure of a possible communication apparatus according to embodiments of the present disclosure. These communication apparatuses may implement functions of the communication apparatus (for example, the communication apparatus in the embodiment shown in FIG. 15) in the foregoing method embodiments, and therefore can also implement beneficial effects of the foregoing method embodiments. For example, in some embodiments of the present disclosure, the communication apparatus may be the terminal device 110 or the network device 120 shown in FIG. 1A, or may be a module (for example, a chip) used in the terminal device 110 or the network device 120.

As shown in FIG. 16, the communication apparatus 1600 includes a processing unit 1610, and in some examples, the communication apparatus 1600 may further include a communication unit 1620. The communication apparatus 1600 may be configured to implement functions of the communication apparatus (for example, the first communication apparatus 210) in the method (or procedure) in embodiments shown in FIG. 2 to FIG. 15. In an example in which the communication apparatus 1600 is configured to implement the functions of the communication apparatus shown in FIG. 15, the processing unit 1610 may include an extraction unit, a quantization unit, and a determining unit, and the communication unit 1620 may be specifically implemented as a transmitter and a receiver. For example, the communication unit 1620 may send, to another communication apparatus (for example, the second communication apparatus 220), data/information/a signal that is determined by the determining unit and that are encrypted by using a physical layer key. In some examples, the communication apparatus 1600 may send configured signaling to another communication apparatus through the communication unit 1620 or receive signaling from another communication apparatus through the communication unit 1620. In some examples, the processing unit 1610 may be specifically implemented as a processor.

When the communication apparatus 1600 is configured to implement the functions of the communication apparatus in the method embodiment shown in FIG. 15, the extraction unit in the processing unit 1610 may be configured to extract channel randomness information from an estimated channel matrix. The quantization unit in the processing unit 1210 may be configured to quantize the channel randomness information, where the quantized channel randomness information belongs to a quotient group of a discrete integer field. The determining unit in the processing unit 1210 may be configured to determine a physical layer key based on the quantized channel randomness information. For more detailed descriptions of the foregoing units, refer to related descriptions in the foregoing method embodiments. Details are not described herein again.

As shown in FIG. 17, a communication apparatus 1700 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to store instructions that are executed by the processor 1710, store input data needed by the processor 1710 to run instructions, or store data generated after the processor 1710 runs instructions. It should be noted that, in some embodiments, the processor 1710 and the memory 1730 may be integrated into a same device. When the communication apparatus 1700 is configured to implement the method in the foregoing method embodiments, the interface circuit 1720 is configured to perform functions of the communication unit 1620.

When the foregoing communication apparatus is a chip used in a communication apparatus, the chip of the communication apparatus correspondingly implements functions of the communication apparatus in the foregoing method embodiments. The chip of the communication apparatus sends data to another module (for example, a radio frequency module or an antenna) in the communication apparatus, where the data is sent to another apparatus. Alternatively, the chip of the communication apparatus receives data from another module (for example, a radio frequency module or an antenna) in the communication apparatus, where the data is received from another apparatus.

It can be understood that the processor in the embodiments of the present disclosure may be a central processing unit (central processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of the present disclosure provides a communication system. The communication system may include the communication apparatus in the embodiment shown in FIG. 15. Optionally, the communication apparatus in the communication system may correspondingly perform the communication method shown in FIG. 15.

An embodiment of the present disclosure further provides a circuit. The circuit may be coupled to a memory, and may be configured to perform a procedure related to the communication apparatus in any one of the foregoing method embodiments. A chip system may include a chip, and may further include another component, for example, a memory or a transceiver.

It should be understood that, the processor mentioned in embodiments of the present disclosure may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of the present disclosure may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) is integrated into the processor.

It should be noted that the memory described in this specification includes but is not limited to these memories and any memory of another appropriate type.

It should be understood that sequence numbers of the foregoing processes do not mean execution sequences in various embodiments of the present disclosure. The execution sequences of the processes should be determined based on functions and internal logic of the processes, and should not be construed as any limitation on the implementation processes of embodiments of the present disclosure.

A person of ordinary skill in the art may be aware that, modules and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in the present disclosure, it should be understood that the disclosed communication method and apparatus may be implemented in other manners. For example, the described apparatus embodiment is merely an example. For example, the division of the modules is merely logical function division and there may be another division manner in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. A part or all of the units may be selected based on actual requirements to achieve the objectives of the solutions of embodiments.

In addition, functional modules in embodiments of the present disclosure may be integrated into one processing module, or each of the modules may exist alone physically, or two or more modules may be integrated into one module.

When the function is implemented in the form of a software functional module and sold or used as an independent product, the integrated unit may be stored in a computer-readable storage medium. Based on such an understanding, the technical solutions of embodiments of the present disclosure essentially, or the part making a contribution, or a part of the technical solutions may be implemented in a form of a software product. The computer software product is stored in a storage medium and includes several instructions for instructing a computer device (which may be a personal computer, a server, or a network device) to perform all or a part of the steps of the methods described in embodiments of the present disclosure. A computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage, a magnetic disk storage medium or another magnetic storage device, or any other medium that can be configured to carry or store expected program code in a form of an instruction or a data structure and can be accessed by a computer.

As used in this specification, the term "including" and similar terms thereof shall be understood as open inclusion, that is, "including but not limited to". The term "based on" should be understood as "at least partially based on". The term "one embodiment" or "this embodiment" should be understood as "at least one embodiment". The terms such as "first", "second", and the like may refer to different objects or a same object, and are only used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, the "determining" may include operating, computing, processing, export, investigation, lookup (for example, lookup in a table, database, or another data structure), finding, and the like. In addition, the "determining" may include receiving (for example, receiving information), accessing (for example, accessing data in a memory), and the like. In addition, the "determining" may include parsing, selection, choice, establishment, and the like.

The foregoing descriptions are merely specific implementations of embodiments of the present disclosure, but are not intended to limit the protection scope of embodiments of the present disclosure. Any variation or replacement readily figured out by a person skilled in the art within the technical scope disclosed in embodiments of the present disclosure shall fall within the protection scope of embodiments of the present disclosure. Therefore, the protection scope of embodiments of the present disclosure shall be subject to the protection scope of the claims.

## Claims

1. A method for determining a key, comprising:
extracting channel randomness information from an estimated channel matrix;
quantizing the channel randomness information, wherein the quantized channel randomness information belongs to a quotient group of a discrete integer field; and
determining a physical layer key based on the quantized channel randomness information.

2. The method according to claim 1, wherein the channel randomness information is quantized based on a first mapping function determined based on a quantization level.

3. The method according to claim 1 or 2, wherein quantizing the channel randomness information comprises:
mapping, based on a second mapping function, the channel randomness information from its domain of definition to a first value interval, to obtain a value of the channel randomness information in the first value interval; and
mapping, based on the first mapping function, the value of the channel randomness information in the first value interval to the quotient group of the discrete integer field.

4. The method according to claim 3, wherein a first parameter of the first mapping function is obtained based on an output of the second mapping function, and a second parameter of the first mapping function is obtained based on the quantization level.

5. The method according to claim 4, wherein the channel randomness information is a real part or an imaginary part of an element value in the estimated channel matrix, and the second mapping function is a cumulative distribution function of a standard normal distribution.

6. The method according to claim 4, wherein the channel randomness information is a modulus of an element value in the estimated channel matrix, and the second mapping function is a cumulative distribution function of a Rayleigh distribution.

7. The method according to claim 4, wherein the channel randomness information is a square of a modulus of an element value in the estimated channel matrix, and the second mapping function is a function defined based on an exponential distribution characteristic.

8. The method according to claim 4, wherein the channel randomness information is an argument of an element value in the estimated channel matrix, and the second mapping function is a function defined based on the argument.

9. The method according to any one of claims 5 to 8, wherein an input of the second mapping function is one of the following:
channel randomness information normalized based on an empirical distribution parameter; or
the channel randomness information.

10. The method according to claim 3, wherein the channel randomness information is an argument of an element value in the estimated channel matrix, and the second mapping function is a cumulative distribution function of a uniform distribution over an interval [0,2π].

11. The method according to claim 1 or 2, wherein the channel randomness information is an argument of an element value in the estimated channel matrix, a first parameter of the first mapping function is obtained based on the argument, and a second parameter of the first mapping function is obtained based on the quantization level.

12. The method according to any one of claims 4 to 11, wherein the first mapping function is used to scale an interval corresponding to the first parameter from a first interval to a second interval, and then map the second interval to the quotient group of the discrete integer field, wherein an upper limit of the second interval is an integer multiple of the quantization level.

13. The method according to claim 9, wherein the first mapping function is used to scale an interval corresponding to the first parameter, and then map the scaled interval to the quotient group of the discrete integer field, wherein an upper limit of the scaled interval is an integer multiple of the quantization level, and when the channel randomness information normalized based on the empirical distribution parameter is not used as the input of the second mapping function, the integer multiple is greater than a preset threshold.

14. The method according to any one of claims 1 to 13, wherein the channel randomness information is determined based on a mode selected by a first communication apparatus that performs the method, and at least one of the following is satisfied:
the mode is determined according to a protocol; or
the mode is determined based on signaling exchange between the first communication apparatus and a second communication apparatus, wherein the first communication apparatus communicates with the second communication apparatus by using the physical layer key.

15. The method according to claim 14, wherein the mode is selected based on a condition of a channel between the first communication apparatus and the second communication apparatus.

16. The method according to claim 15, further comprising:
receiving or sending, when at least one of the channel conditions changes, an indication to update the mode.

17. The method according to any one of claims 1 to 16, wherein the channel randomness information is extracted based on an index of an element value in the estimated channel matrix.

18. The method according to claim 17, wherein
the index is agreed on in advance between the first communication apparatus that performs the method and the second communication apparatus, wherein the first communication apparatus communicates with the second communication apparatus by using the physical layer key; or
the index is determined based on signaling exchange between the first communication apparatus and the second communication apparatus.

19. A communication apparatus, comprising:
an extraction unit, configured to extract channel randomness information from an estimated channel matrix;
a quantization unit, configured to quantize the channel randomness information, wherein the quantized channel randomness information belongs to a quotient group of a discrete integer field; and
a determining unit, configured to determine a physical layer key based on the quantized channel randomness information.

20. A communication apparatus, comprising a processor and a memory storing instructions, wherein when the instructions are executed by the processor, the method according to any one of claims 1 to 18 is caused to be performed.

21. A communication system, comprising the communication apparatus according to claim 19 or 20.

22. A computer-readable storage medium, wherein the computer-readable storage medium stores a computer program or instructions, and when the computer program or the instructions are executed, the method according to any one of claims 1 to 18 is caused to be performed.

23. A computer program product, comprising a computer program or instructions, wherein when the computer program or the instructions are executed, the method according to any one of claims 1 to 18 is caused to be performed.
